(19) **Europäisches Patentamt European Patent Office Office européen des brevets**

(11) **EP 2 857 760 B1**

(12) **FASCICULE DE BREVET EUROPEEN**

(45) Date de publication et mention de la délivrance du brevet:
**05.10.2016 Bulletin 2016/40**

(51) Int Cl.:
*G05D 23/19* (2006.01)    *F24D 19/10* (2006.01)
*F24D 12/02* (2006.01)

(21) Numéro de dépôt: **14186341.5**

(22) Date de dépôt: **25.09.2014**

(54) **Procédé de régulation d'un système de chauffage hybride**

Verfahren zum Regulieren eines Hybrid-Heizsystems

Method for controlling a hybrid heating system

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.10.2013 FR 1359724**

(43) Date de publication de la demande:
**08.04.2015 Bulletin 2015/15**

(73) Titulaire: **Electricité de France**
**75008 Paris (FR)**

(72) Inventeurs:
• **Luca, Anamaria**
  **75011 Paris (FR)**
• **Courtot, François**
  **77210 Avon (FR)**

(74) Mandataire: **Cabinet Plasseraud**
  **66, rue de la Chaussée d'Antin**
  **75440 Paris Cedex 09 (FR)**

(56) Documents cités:
**WO-A2-2012/077333    US-A- 5 259 445**
**US-A1- 2012 248 212**

**Description**

## DOMAINE TECHNIQUE

L'invention se rapporte au domaine de la régulation de systèmes de chauffage hybride.

Plus particulièrement, l'invention concerne la régulation de systèmes de chauffage, par exemple résidentiels, comprenant deux générateurs de chaleur dont l'un est une pompe à chaleur et l'autre est une chaudière à combustion, en vue d'optimiser le pilotage du système afin de répondre à un objectif de fonctionnement choisi.

## ARRIÈRE-PLAN TECHNOLOGIQUE

Le chauffage des bâtiments industriels, commerciaux ou résidentiels, peut nécessiter un apport de chaleur important entraînant par exemple une consommation de combustible ou d'électricité pouvant engendrer des coûts élevés, ainsi que l'émission de gaz à effet de serre. Les besoins thermiques des bâtiments concernent aussi bien la production d'eau chaude sanitaire que le chauffage d'une pièce. Dans l'optique d'un développement durable, des systèmes de chauffage intelligents et des régulateurs de tels systèmes sont recherchés.

Les chaudières à combustion sont efficaces pour fournir une quantité de chaleur importante, mais ont en général une consommation élevée en combustible et génèrent des gaz à effet de serre tels que le $CO_2$. Les Pompes A Chaleur (PAC), plus écologiques, apportent une part d'énergie gratuite, une part d'énergie renouvelable et une réduction des émissions de $CO_2$ comparées aux chaudières à combustion. En cela, elles constituent une solution de chauffage alternative intéressante. Cependant, les PAC présentent des contraintes en température et en puissance maximale disponible. Par conséquent, la rénovation d'un système de chauffage à combustion déjà présent dans un immeuble peut avantageusement se faire par l'installation d'une PAC pour former un système hybride combinant une pompe à chaleur avec une chaudière à combustion. La chaudière à combustion apporte l'essentiel de la puissance instantanée en régime de relance et aux températures extérieures hivernales extrêmes. La PAC, plus faiblement dimensionnée, assure une base d'énergie renouvelable et gratuite avec de faibles émissions $CO_2$.

Ces deux générateurs peuvent être reliés l'un à l'autre en parallèle ou en série au sein d'un même circuit fluidique. L'utilisation d'un tel système hybride fait intervenir un pilotage couplé des deux générateurs, commandé en général par un régulateur. Ce régulateur optimise le fonctionnement des générateurs pour assurer le confort thermique dans le bâtiment tout en répondant à une consigne thermique selon un type de fonctionnement choisi respectant au moins une contrainte ou objectif de régulation comme par exemple minimiser les coûts, minimiser les émissions de $CO_2$, minimiser la consommation d'énergie ou maximiser la part d'énergie renouvelable.

En règle générale, la régulation d'un tel système hybride passe par l'obtention d'un coefficient de performance seuil de la pompe à chaleur. Cette dernière n'est autorisée à fonctionner que lorsque son coefficient de performance courant est supérieur au coefficient de performance seuil. Si tel n'est pas le cas, l'utilisation de la pompe à chaleur n'est pas jugée rentable et la chaudière à combustion fournit toute la chaleur demandée. Autrement, la pompe à chaleur fournit toute la chaleur nécessaire pour couvrir le besoin thermique. Si cette chaleur est insuffisante, la chaudière à combustion fournit l'excédent d'énergie thermique.

Le document DE 102 010 056 300 propose une optimisation de la régulation d'un système de chauffage hybride dans lequel, lorsque la condition de mise en marche de la pompe à chaleur est satisfaite, le régulateur calcule une température d'eau à atteindre en sortie de la PAC permettant de minimiser un paramètre de coût du système, la chaudière à combustion fournissant l'excédent d'énergie thermique requise.

Cette régulation présente cependant l'inconvénient de n'utiliser la chaudière à combustion que comme un chauffage d'appoint. Cette régulation présente par conséquent l'inconvénient qu'elle n'optimise pas le fonctionnement dynamique du couplage PAC/ chaudière à combustion, alors que le fonctionnement conjoint des deux dispositifs de chauffage, et notamment les oscillations de température instantanée engendrées, affecte la performance globale du système selon l'objectif de régulation choisit.

Le document WO 2012077333 A2 propose une optimisation différente de la régulation d'un système de chauffage hybride. Lorsque la condition de mise en marche de la pompe à chaleur n'est pas satisfaite, le régulateur calcule une température intermédiaire à atteindre par la pompe à chaleur, ladite température satisfaisant la condition de mise en marche de la pompe à chaleur. La chaudière à combustion fournit l'excédent d'énergie thermique requise pour répondre à la consigne thermique.

Cependant, dans un système de chauffage hybride, l'utilisation conjointe de la pompe à chaleur et de la chaudière à combustion peut induire des oscillations, par exemple de température ou pression, dans le fluide circulant à travers la PAC. Ces oscillations peuvent conduire à un régime de fonctionnement cyclé de la pompe à chaleur alternant des phases de marche et d'arrêt. Un tel fonctionnement cyclé est susceptible de réduire la durée de vie de la pompe à chaleur et peut s'avérer moins écologique qu'un fonctionnement continu en raison des dépenses induites pour démarrer et arrêter la pompe à chaleur.

Par conséquent, il est recherché un procédé de régulation et un régulateur optimisant le fonctionnement d'un système de chauffage hybride, permettant de surmonter les inconvénients des systèmes existants et offrant des performances améliorées, notamment en évitant un cyclage rapide de la pompe à chaleur dans un système de chauffage hybride.

## EXPOSE DE L'INVENTION

Pour répondre aux problèmes exposés ci-avant, la présente invention propose un procédé de régulation d'un système de chauffage hybride comportant au moins:

- une pompe à chaleur, et
- une chaudière à combustion,

le procédé comprenant les étapes suivantes:

- obtenir une valeur d'un point de fonctionnement cible du système, et
- déterminer une valeur d'un point de fonctionnement seuil de la pompe à chaleur, le franchissement du point de fonctionnement seuil entrainant une permutation du régime de fonctionnement de la pompe à chaleur entre un état actif et un état inactif, et
- commander la chaudière à combustion selon un régime de fonctionnement par intermittence (par exemple afin de rallonger les phases de fonctionnement de la pompe à chaleur) lorsque l'écart entre la valeur du point de fonctionnement seuil et la valeur du point de fonctionnement cible est inférieur à une valeur choisie.

En d'autres termes, ce procédé de régulation consiste à obtenir la valeur d'un paramètre cible du système et déterminer la valeur d'un paramètre seuil de la pompe à chaleur, pour estimer un écart entre ces deux valeurs. Cet écart correspond à une valeur absolue de la différence entre les valeurs du paramètre seuil et cible. Sur la base de cet écart, le procédé utilise ou n'utilise pas la chaudière à combustion comme un instrument de régulation permettant de créer des conditions optimisant le cycle de fonctionnement de la pompe à chaleur, par exemple en réduisant la fréquence des permutations entre marche et arrêt de cette dernière. En effet, un fonctionnement par intermittence de la chaudière à combustion modifie les variations de température instantanées dans le système, qui conditionnent la mise en marche ou mise à l'arrêt d'une pompe à chaleur. En identifiant le lien entre le fonctionnement de la chaudière à combustion et un écart minimal entre valeur de fonctionnement seuil et valeur de fonctionnement cible, l'invention rend possible l'optimisation du fonctionnement d'une pompe à chaleur dans un système hybride.

En guise de paramètres cible et seuil, il est par exemple possible d'utiliser une température, une pression dans un fluide parcourant la pompe à chaleur, un débit de fluide parcourant la pompe à chaleur, ou bien encore un rendement énergétique de la pompe à chaleur. Ces différents paramètres peuvent avantageusement impliquer des mesures effectuées par des capteurs, ou bien provenir au moins en partie de données intrinsèques de la pompe à chaleur ou du système hybride, fournies par le constructeur. Le paramètre cible peut ainsi dépendre entre autres d'une consigne de chauffage à atteindre, par exemple une température, un débit ou une pression en un point du système de chauffage hybride.

Le paramètre cible peut être imposé comme une donnée, par exemple à un régulateur du système de chauffage hybride. Il peut également être déterminé par un calcul, effectué par exemple par un régulateur, à partir d'une consigne de chauffage. Le paramètre cible peut par exemple être calculé à partir d'une loi d'eau en utilisant une mesure d'une température extérieure, éventuellement corrigée par des informations complémentaires issues par exemple d'une sonde intérieure, fournissant des données susceptibles d'influencer l'estimation du point de fonctionnement cible.

Le procédé repose sur le constat suivant : dans un système de chauffage hybride, l'utilisation conjointe de la pompe à chaleur et de la chaudière à combustion peut induire des oscillations dans le fluide circulant à travers la pompe à chaleur. Ces oscillations peuvent par exemple être détectées sous la forme d'une oscillation de température, de pression, du débit, ou une variation du rendement de la pompe à chaleur. L'amplitude de ces oscillations suffit parfois à franchir un point de fonctionnement seuil de la pompe à chaleur provoquant l'arrêt ou la mise en marche de la pompe à chaleur, lorsque la valeur du point de fonctionnement cible est voisine de la valeur du point de fonctionnement seuil. L'invention propose alors de modifier la période ou la fréquence de ces oscillations en commandant la chaudière à combustion selon un régime de fonctionnement par intermittence, en vue de rallonger les phases de fonctionnement de la pompe à chaleur.

Le rallongement des phases de fonctionnement de la pompe à chaleur peu aussi bien comprendre une augmentation de la durée pendant laquelle la pompe à chaleur est active qu'une simple mise en marche de la pompe à chaleur.

Une telle régulation permet de faire fonctionner la pompe à chaleur plus souvent et dans de meilleures conditions que dans les systèmes hybrides régulés selon des procédés antérieurs à l'invention.

Ce procédé de régulation peut notamment améliorer les performances d'un système de chauffage hybride d'environ 2% à 5% sur une saison, en optimisant les dépenses engendrées par le système, par exemple les dépenses énergétiques, financières, ou l'émission de $CO_2$.

Par ailleurs, en modifiant la période ou la fréquence, et/ou l'amplitude, et/ou la forme des oscillations induites dans le système de chauffage hybride, il est possible de diminuer l'occurrence de permutations entre un état actif et un état inactif de la pompe à chaleur, augmentant ainsi sa durée de vie.

De manière avantageuse, le système peut comprendre un circuit fluidique reliant la pompe à chaleur à la chaudière à combustion et un capteur de température situé dans le circuit fluidique en amont de la pompe à chaleur, la valeur du point de fonctionnement cible étant définie par une température cible dans le circuit fluidique en amont de la pompe à chaleur, et la valeur du point de fonctionnement seuil étant définie par une température seuil dans le circuit fluidique en amont de la pompe à chaleur, la pompe à chaleur pouvant être mise à l'arrêt lorsqu'une température instantanée mesurée par le capteur de température est supérieure à ladite température seuil.

La pompe à chaleur étant composée d'une source froide, par exemple l'air dans le cas d'une PAC air/eau ou air/air et d'un puits chaud constitué par exemple d'eau pour une PAC air/eau, l'aval de la pompe à chaleur désigne l'espace situé à la sortie de la pompe à chaleur tandis que l'amont de la pompe à chaleur désigne l'espace situé à l'entrée de la pompe à chaleur.

L'utilisation, en guise de valeur de point de fonctionnement cible et seuil, d'une valeur de température obtenue en amont de la pompe à chaleur peut s'avérer particulièrement intéressante car un tel paramètre peut être facilement obtenu. En effet, une valeur de température peut être obtenue à l'aide d'un capteur placé en entrée de la pompe à chaleur, en amont, ou incorporé dans cette dernière. L'obtention de ces paramètres à proximité de la pompe à chaleur en amont de cette dernière fournit des données de la pompe à chaleur qui ne nécessitent ni corrections ni calculs pour déterminer les conditions de mise en oeuvre d'un fonctionnement par intermittence de la chaudière à combustion. Il est à noter qu'il est tout à fait envisageable d'estimer des paramètres seuil et cible de la pompe à chaleur à partir de valeurs obtenues en d'autres points du système, et par exemple en aval de la pompe à chaleur. Il est possible d'estimer ces paramètres en des points éloignés de la pompe à chaleur, le fonctionnement du système hybride couplant les différents éléments du système entre eux. Ce couplage est d'autant plus fort et efficace que la pompe à chaleur et la chaudière à combustion sont reliées en parallèle ou en série à un même circuit fluidique. Cependant, à partir de données obtenues en d'autres points du système, des calculs ou correctifs visant à retrouver les paramètres de fonctionnement de la pompe à chaleur peuvent alourdir la mise en oeuvre du procédé. Les températures cible, seuil et instantanée sont avantageusement obtenues en un même point du système.

Il peut s'avérer avantageux que le procédé de régulation comprenne en outre :

- obtenir un coefficient de performance seuil de la pompe à chaleur, la température seuil étant fonction dudit coefficient de performance seuil.

Le coefficient de performance seuil de la PAC, calculé en fonction d'un objectif de régulation choisi, correspond au rendement de la PAC en-dessous duquel la PAC devient moins rentable que la chaudière à combustion pour fournir de la chaleur selon un objectif de régulation choisi.

Un moyen efficace pour obtenir la température seuil est d'utiliser une cartographie de l'ensemble des valeurs prises par un coefficient de performance de la PAC en fonction de paramètres relatifs aux fluides côté source froide et côté puits chaud de la PAC, par exemple une température d'air et/ou un débit d'eau à travers la PAC, et éventuellement en fonction d'une consigne thermique. Une telle cartographie permet de déterminer la température seuil pour laquelle le coefficient de performance de la PAC coïncide avec le coefficient de performance seuil, à partir des conditions réelles mesurées côté source froide.

L'avantage d'utiliser un coefficient de performance seuil réside dans le fait qu'il permet de faciliter la détermination de la température seuil de la pompe à chaleur, le calcul de cette température ne mettant en oeuvre qu'un nombre limité de paramètres physiques, comme par exemple une température extérieure et un débit d'eau.

Avantageusement, la chaudière à combustion pouvant comprendre un régulateur d'allures apte à piloter la chaudière à combustion sur au moins une première allure de fonctionnement et une seconde allure de fonctionnement de puissance supérieure à la première allure de fonctionnement, le fonctionnement par intermittence de la chaudière à combustion peut comprendre :

- modifier par intermittence des allures de fonctionnement de la chaudière à combustion.

Il est entendu par « allure » un réglage de puissance thermique fournie par la chaudière à combustion. Une pluralité d'allures peut alors constituer un moyen supplémentaire d'action sur les oscillations de la température instantanée en amont de la pompe à chaleur. Il peut ainsi être possible de configurer une permutation entre différentes allures de la chaudière à combustion afin d'agir sur la périodicité des oscillations. Grâce à une telle régulation, il devient alors possible de ne pas mettre totalement à l'arrêt la chaudière à combustion, réduisant ainsi les dépenses liées à une mise en marche ou une mise à l'arrêt.

Selon un mode de réalisation avantageux, lorsque la différence entre la température seuil et la température cible est négative et l'écart entre lesdites températures seuil et cible est inférieur à un premier seuil, et lorsque ladite différence est positive et inférieure à un troisième seuil, le fonctionnement par intermittence de la chaudière à combustion peut comprendre :

- commander la chaudière à combustion selon un mode de fonctionnement en cyclage forcé, ledit cyclage forcé comprenant le rallongement d'au moins un paramètre parmi des phases d'arrêt de la chaudière à combustion et des phases de fonctionnement à une première allure de la chaudière à combustion.

Plus généralement, elle consiste en un rallongement des phases de fonctionnement durant lesquelles la puissance thermique fournie au système est inférieure à la puissance moyenne appelée, c'est-à-dire les phases durant lesquelles la température instantanée décroit. Cette manière de commander la chaudière à combustion peut agir sur la périodicité des oscillations de la température instantanée en amont de la pompe à chaleur. En effet, lorsque la température seuil est faiblement inférieure à la température cible, la pompe à chaleur reste généralement dans un état inactif, la consigne thermique à atteindre étant supérieure au seuil au-dessus duquel l'utilisation de la pompe à chaleur n'est plus rentable. Cependant, pendant les brefs instants pendant lesquels la température instantanée devient inférieure à la température seuil, la pompe à chaleur est mise en marche. Ces permutations d'état de fonctionnement pouvant intervenir sur un lapse de temps bref, elles sont susceptibles d'endommager la pompe à chaleur et réduire ses performances. En rallongeant les phases d'arrêt ou les phases de fonctionnement à une allure de faible puissance proche de l'état d'arrêt de la chaudière à combustion, les périodes des oscillations de la température instantanée augmentent, permettant de maintenir cette température instantanée plus longtemps en-dessous de la température seuil pour que la fréquence des permutations des états de marche et d'arrêt de la pompe à chaleur diminue.

Lorsque la température seuil est faiblement supérieure à la température cible, la consigne thermique à atteindre est inférieure au seuil au-dessus duquel l'utilisation de la pompe à chaleur n'est plus rentable. Cependant, les oscillations de la température instantanée créées par le cyclage de la chaudière peuvent dépasser le seuil et entrainer l'arrêt cyclique de la pompe à chaleur. Il existe un temps minimum d'arrêt de la PAC et un temps minimum de marche de la PAC en-dessous desquels la PAC ne peut pas être pilotée. En effet, le temps de marche minimum peut par exemple correspondre à un temps nécessaire pour qu'une lubrification suffisante du compresseur de la PAC se mette en place et le temps d'arrêt minimum peut correspondre à un temps nécessaire pour que les enroulements du moteur de la PAC refroidissent suffisamment avant un nouveau redémarrage de la PAC. En rallongeant les phases d'arrêt et les phases de fonctionnement à une allure de faible puissance proche de l'état d'arrêt de la chaudière à combustion, les périodes des oscillations de la température instantanée augmentent, permettant de maintenir cette température instantanée plus longtemps en-dessous et au-dessus de la température seuil pour que les durées de marche et d'arrêt de la PAC soient supérieures à leurs valeurs minimum imposées. Ce faisant on rallonge les phases de fonctionnement de la pompe à chaleur.

Concomitamment, lorsque la différence entre la température seuil et la température cible est positive et supérieure à un troisième seuil et lorsque ladite différence est positive et inférieure à un deuxième seuil, le fonctionnement par intermittence de la chaudière à combustion peut comprendre :

- commander la chaudière à combustion selon un mode de fonctionnement en cyclage accéléré, ledit cyclage accéléré comprenant le raccourcissement d'au moins un paramètre parmi des phases de marche et d'arrêt de la chaudière à combustion et des phases de fonctionnement à une première allure et à une seconde allure de puissance supérieure à la première allure de la chaudière à combustion.

Cette manière de commander la chaudière à combustion peut agir sur l'amplitude des oscillations de la température instantanée en amont de la pompe à chaleur. En effet, lorsque la température seuil est faiblement supérieure à la température cible, la pompe à chaleur reste généralement dans un état actif, la consigne thermique à atteindre étant inférieure au seuil au-dessus duquel l'utilisation de la pompe à chaleur n'est plus rentable. Cependant, pendant les brefs instants pendant lesquels la température instantanée dépasse la température seuil, la pompe à chaleur est mise à l'arrêt. Ces permutations d'état de fonctionnement pouvant intervenir sur un lapse de temps bref, elles sont susceptibles d'endommager la pompe à chaleur et réduire ses performances. En raccourcissant les périodes de marche et d'arrêt de la chaudière à combustion ou bien en raccourcissant la durée des phases de fonctionnement à une première allure et une seconde allure de puissance supérieure à la première allure, l'amplitude des oscillations de la température instantanée diminue, permettant de maintenir cette température instantanée en permanence en-dessous de la température seuil pour que la pompe à chaleur puisse fonctionner en continu.

Selon un mode de réalisation, la commande de la chaudière à combustion selon un régime de fonctionnement par intermittence peut comprendre :

- calculer au moins un paramètre parmi une durée de mise en marche et une durée de fonctionnement à une seconde allure de la chaudière à combustion et au moins un paramètre parmi une durée de mise à l'arrêt et une durée de fonctionnement à une première allure de puissance inférieure à la puissance de la seconde allure de la chaudière à combustion, lesdites durées étant calculées de façon dynamique en fonction de la valeur de l'écart entre la température seuil et la température cible.

Un tel calcul peut s'effectuer avantageusement de façon dynamique de manière à corriger régulièrement les durées de mise en marche de la chaudière à combustion ainsi que le ratio des phases de mise en marche par rapport aux phases de mise à l'arrêt. De cette manière, l'effet recherché de régulation des cycles de fonctionnement de la pompe à chaleur peut être obtenu en anticipant les fluctuations de la température dans le système, ces fluctuations se produisant avec une certaine inertie. Ce suivi dynamique peut être d'autant plus ingénieux que la température seuil de la pompe à chaleur peut varier dans le temps en fonction des conditions à la source froide, ainsi que de l'objectif de régulation choisi. Le même effet peut être obtenu en agissant uniquement sur les allures de la chaudière à combustion sans l'arrêter.

De manière avantageuse, la commande de la chaudière à combustion selon un régime de fonctionnement par intermittence peut comprendre :

- définir une bande de températures centrée sur la température cible, dont la largeur est fonction de l'écart entre la température seuil et la température cible ;
- effectuer au moins une étape parmi mettre en marche la chaudière à combustion et commander la chaudière à combustion à une seconde allure, lorsque la température instantanée en amont de la pompe à chaleur est inférieure aux températures de ladite bande; et
- effectuer au moins une étape parmi arrêter la chaudière à combustion et commander la chaudière à combustion à une premier allure de puissance inférieure à la puissance de la seconde allure lorsque ladite température instantanée est supérieure aux températures de ladite bande.

Ce mode de réalisation peut constituer un moyen efficace de suivi des conditions de permutation entre état actif et inactif ou entre allures de la chaudière à combustion. Le suivi de la valeur de l'écart entre la température seuil et la température cible permet de fixer des conditions pour l'activation ou la désactivation de la chaudière à combustion ou bien pour la variation des allures de fonctionnement de la chaudière à combustion. En cyclage forcé, une augmentation de la largeur de la bande de températures, aussi appelée bande morte, permet d'augmenter l'amplitude et la période des oscillations de la température instantanée. En cyclage accéléré, une réduction de la largeur de la bande morte permet au contraire de réduire l'amplitude et la période des oscillations de la température instantanée. La modification de la largeur de la bande morte en fonction de l'écart entre température seuil et température cible peut ainsi constituer un moyen avantageux de régulation du fonctionnement par intermittence de la chaudière à combustion.

La mise en oeuvre du procédé peut avantageusement comprendre :

- choisir un type de fonctionnement du système respectant au moins l'une des contraintes parmi une réduction de la consommation d'énergie, une réduction des coûts de consommation, une réduction de l'émission de gaz à effets de serre, ledit type de fonctionnement définissant un coefficient de performance seuil C(thr) de la pompe à chaleur pouvant s'exprimer en fonction des coefficients F(elec) pour la pompe à chaleur et F(comb) pour la chaudière à combustion sous la forme :

$$C(thr) = \eta \frac{F(elec)}{F(comb)}$$

Où $\eta$ désigne un rendement de la chaudière à combustion.

En sélectionnant un type de fonctionnement du système respectant au moins une contrainte ou objectif de régulation tel que, par exemple, réduire la consommation d'énergie, réduire les coûts de consommation, réduire l'émission de $CO_2$, le régulateur peut adapter et optimiser les conditions de mise en marche, cyclage et mise à l'arrêt de la pompe à chaleur et de la chaudière à combustion. À partir d'un objectif de régulation fourni au système, le procédé de régulation définit un coefficient de performance seuil de la pompe à chaleur, faisant intervenir le rendement $\eta$ du générateur à combustion, proportionnel au rapport entre la puissance thermique produite par le générateur et la quantité d'énergie consommée. Le coefficient de performance seuil est un paramètre variable du système, notamment en vertu du fait que les coefficients F(elec) et F(comb) peuvent varier au cours du temps. Les valeurs des coefficients F(elec) et F(comb) dépendent de l'objectif de régulation choisi. Par exemple, pour un objectif de minimisation de la consommation d'énergie primaire, F(comb)=1 et F(elec)=2,58. Le coefficient de performance seuil C(thr) s'exprime sous la forme d'un rapport entre énergie thermique produite et énergie électrique consommée. Le coefficient F(elec) s'exprime sous la forme de l'unité à optimiser par unité d'énergie électrique consommée par exemple en euros par kWh ou en masse de $CO_2$ émis par kWh. Le coefficient F(comb) s'exprime sous la forme de l'unité à optimiser par unité d'énergie combustible consommée par exemple en euros par kWh ou masse de $CO_2$ émis par kWh.

Selon un mode de réalisation, le procédé peut comprendre un calcul d'une première vitesse v_p d'un compresseur à vitesse variable de la pompe à chaleur, ladite première vitesse étant calculée à partir du coefficient de performance seuil C(thr) de la pompe à chaleur à l'aide de la formule suivante :

$$\frac{dP(th\_PAC)}{dP(elec\_PAC)}\bigg|_{v\_p} = C(thr)$$

où P(th_PAC) désigne la puissance thermique délivrée par la pompe à chaleur, P(elec_PAC) désigne la puissance électrique consommée par la pompe à chaleur.

Il se peut notamment que le compresseur soit commandé pour atteindre la première vitesse.

Cette première vitesse ainsi définie permet de réduire un paramètre coût du système de chauffage hybride, par exemple le montant de la facture énergétique, la consommation d'énergie, ou l'émission de $CO_2$. Lorsque la pompe à chaleur comprend un compresseur à vitesse variable, le calcul de la vitesse v_p est avantageux afin de connaître les conditions optimales de fonctionnement de la pompe à chaleur permettant de remplir l'objectif de régulation choisi, cet objectif étant défini à partir du coefficient de performance seuil de la pompe à chaleur. Cependant, il peut ne pas être nécessaire de faire fonctionner le compresseur de la PAC à la vitesse v_p dans l'intérêt de la pompe à chaleur et notamment sa durée de vie.

De manière avantageuse, le procédé peut comprendre en outre :

- calculer une seconde vitesse pour le compresseur de la pompe à chaleur ;ladite seconde vitesse étant une vitesse permettant à la pompe à chaleur d'atteindre un point de fonctionnement cible du système tout en maintenant la chaudière à combustion à l'arrêt, et - piloter le compresseur pour atteindre la seconde vitesse dans les trois conditions cumulées:

    - la chaudière à combustion étant à l'arrêt, la pompe à chaleur est apte à atteindre ledit point de fonctionnement cible du système, et
    - la mise en marche de la chaudière à combustion provoque un fonctionnement par intermittence de la pompe à chaleur, et
    - un coefficient de performance courant de la pompe à chaleur est supérieur au coefficient de performance seuil.

Cette seconde vitesse du compresseur à vitesse variable de la pompe à chaleur permet de réduire le fonctionnement par intermittence que la pompe à chaleur peut subir. Ce fonctionnement par intermittence peut provoquer d'une part une réduction de la durée de vie de la pompe à chaleur, et être à l'origine de gênes acoustiques lors des phases d'arrêt et de remise en route de la PAC.

L'invention se rapporte également à un régulateur d'un système de chauffage hybride comportant au moins:

- une pompe à chaleur, et
- une chaudière à combustion,

ledit régulateur comprenant un circuit permettant:

- d'obtenir une valeur d'un point de fonctionnement cible du système,
- de déterminer la valeur d'un point de fonctionnement seuil de la pompe à chaleur, le franchissement dudit point de fonctionnement seuil entrainant une permutation du régime de fonctionnement de la pompe à chaleur entre un état actif et un état inactif,
- de commander la chaudière à combustion selon un régime de fonctionnement par intermittence lorsque l'écart entre la valeur du point de fonctionnement seuil et la valeur du point de fonctionnement cible est inférieur à une valeur choisie.

Un tel régulateur est particulièrement adapté pour la mise en oeuvre du procédé décrit ci-avant. En particulier, l'utilisation d'un régulateur pouvant être désolidarisé d'un système de chauffage hybride rend possible son installation sur tout type de système de chauffage hybride. Ce régulateur peut également être composé de plusieurs circuits physiquement indépendants mais communiquant entre eux, notamment des capteurs communiquant avec un dispositif central contenant un ou plusieurs circuits destinés à commander la chaudière à combustion et la pompe à chaleur.

L'invention implique également un système de chauffage hybride comprenant un régulateur, pouvant comprendre :

- une pompe à chaleur; et
- une chaudière à combustion; et
- un circuit fluidique reliant la pompe à chaleur à la chaudière à combustion; et
- un capteur.

## DESCRIPTIF DES FIGURES

Le procédé objet de l'invention, sera mieux compris à la lecture de la description qui suit d'exemples de réalisations présentés à titre illustratif, aucunement limitatifs, et à l'observation des dessins ci-après sur lesquels :

- la figure 1 est un ordinogramme représentant des étapes du procédé de l'invention;

- la figure 2 est une représentation schématique d'un système de chauffage hybride utilisant un régulateur selon un mode de réalisation;

- la figure 3a est une représentation graphique des variations temporelles de la température instantanée, seuil et cible de la pompe à chaleur selon un mode de réalisation du procédé;

- la figure 3b est une représentation graphique des variations temporelles des phases de marche et arrêt de la chaudière à combustion selon un mode de réalisation du procédé;

- la figure 4a est une représentation graphique des variations de température instantanée, seuil et cible de la pompe à chaleur selon un mode de réalisation du procédé ;

- la figure 4b est une représentation graphique des variations temporelles des phases de marche et arrêt de la chaudière à combustion selon un mode de réalisation du procédé ;

- la figure 5 est un graphique représentant les quatre phases de commande de la chaudière à combustion en fonction de l'écart entre températures seuil et cible de la pompe à chaleur;

- les figures 6a et 6b sont des représentations graphiques des quatre phases de fonctionnement du système de chauffage hybride en fonction de la température extérieure selon un premier mode de réalisation;

- les figures 7a et 7b sont des représentations graphiques des quatre phases de fonctionnement du système de chauffage hybride en fonction de la température extérieure selon un second mode de réalisation;

- la figure 8 est un ordinogramme présentant les étapes du choix d'une vitesse pour le compresseur de la pompe à chaleur selon un mode de réalisation.

- la figure 9 est une représentation graphique des variations temporelles de la température de la pompe à chaleur par rapport à une bande de températures ;

Pour des raisons de clarté, les dimensions des différents éléments représentés sur ces figures ne sont pas nécessairement en proportion avec leurs dimensions réelles. Sur les figures, des références identiques correspondent à des éléments identiques.

## DESCRIPTION DÉTAILLÉE

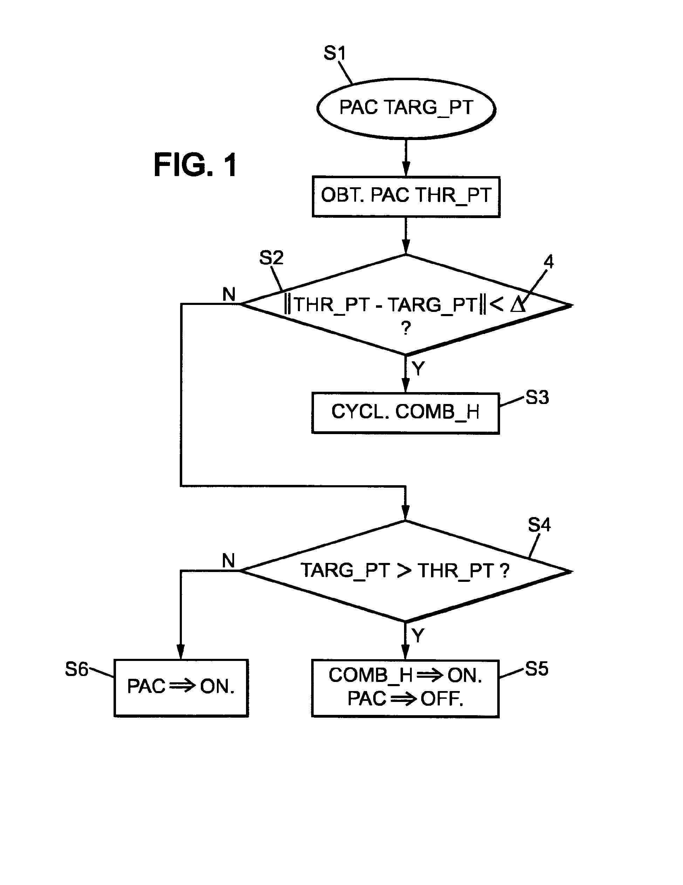

Comme illustré sur la figure 1, le procédé de régulation d'un système de chauffage hybride objet de l'invention comprend, lors d'une première étape **S1,** l'obtention de la valeur d'un point de fonctionnement cible **TARG_PT** du système, et la détermination de la valeur d'un point de fonctionnement seuil **THR_PT** de la pompe à chaleur **PAC.** Ces deux valeurs peuvent correspondre à différents types de données du système de chauffage, comme par exemple des températures, des pressions, des débits de fluide ou des rendements thermiques. Il est possible de choisir l'un quelconque de ces paramètres en guise de point de fonctionnement dans la mesure où les différents éléments du système de chauffage hybride sont couplés entre eux. Ainsi, il est possible de passer d'un paramètre à l'autre en utilisant des relations physiques connues de l'Homme du métier. Certaines de ces transformations peuvent cependant impliquer la mesure de données propres au système pouvant nécessiter l'installation de capteurs. Il est ainsi également possible d'utiliser en guise de paramètres seuil et cible de la pompe à chaleur, des paramètres associés à des éléments du système de chauffage hybride physiquement distants de la pompe à chaleur, par exemple une température en un point d'un circuit fluidique différant d'un point situé en amont ou en aval de la pompe à chaleur. Dans la suite de l'exposé, il sera pris en exemple le cas où le paramètre sélectionné est une température, considérée en un point situé en amont de la pompe à chaleur PAC.

La température cible **TARG_PT** correspond à une température à atteindre dans le système, par exemple exprimée par une température en entrée de la pompe à chaleur. Il peut par exemple s'agir d'une consigne thermique fixée par l'utilisateur d'un système de chauffage hybride ou bien une valeur calculée par un régulateur à partir d'une consigne de chauffage et d'une température extérieure mesurée dans l'espace à chauffer.

La température seuil **THR_PT** de la pompe à chaleur **PAC** correspond à une température au-dessus de laquelle son utilisation serait non rentable. Cette valeur seuil peut varier suivant l'objectif de régulation choisi comme par exemple réduire les émissions de $CO_2$, réduire la facture énergétique, réduire la consommation d'énergie ou maximiser la part d'énergie renouvelable. La température seuil de la pompe à chaleur **PAC** sert ainsi à déterminer s'il est avantageux de mettre en marche ou arrêter la pompe à chaleur **PAC,** en fonction d'une température instantanée en amont de la pompe à chaleur **PAC,** en entrée de cette dernière.

L'écart entre la température seuil **THR_PT** et la température cible **TARG_PT** est estimé lors d'une étape **S2,** en vue de déterminer s'il est inférieur à une valeur seuil Δ choisie. Cette valeur seuil Δ peut avantageusement être choisie comprise entre 1 degré Kelvin et 15 degrés Kelvin. Le choix de la valeur seuil Δ peut différer suivant le système de chauffage hybride utilisé, et peut être estimé en cours d'utilisation. En effet, la valeur seuil Δ correspond à un écart entre températures seuil et cible en-dessous duquel on modifie le comportement de cyclage de la chaudière à combustion de manière à modifier l'amplitude des oscillations d'une température instantanée en amont de la pompe à chaleur.

Cet écart entre la température seuil **THR_PT** et la température cible **TARG_PT** correspond à une distance ou valeur absolue. Lorsqu'il est inférieur à la valeur seuil Δ, le procédé met en oeuvre l'étape **S3,** détaillée plus en détail ci-après, consistant à réguler le système de chauffage en commandant la chaudière à combustion **COMB_H** selon un régime de fonctionnement par intermittence. En d'autres termes, il est opéré un cyclage de la chaudière à combustion **COMB_H,** modifiant la période des phases de marche/arrêt ou induisant des variations de puissance de la chaudière à combustion **COMB_H.** Ce cyclage est effectué en vue d'influencer la température dans le système et influencer le fonctionnement de la pompe à chaleur **PAC,** notamment en vue de rallonger les phases de fonctionnement de la pompe à chaleur **PAC.** Si l'écart entre température seuil **THR_PT** et température cible **TARG_PT** est supérieur à la valeur Δ, le procédé vérifie à l'étape **S4** si la température cible est supérieure à la température seuil **THR_PT.**

Si tel est le cas, l'étape **S5** de la régulation du système consiste à mettre en marche la chaudière à combustion **COMB_H** et arrêter la pompe à chaleur **PAC,** dont l'utilisation n'est pas rentable.

Dans le cas contraire, à l'étape **S6,** la pompe à chaleur **PAC** est mise en marche et la chaudière à combustion **COMB_H** est arrêtée, sauf si la pompe à chaleur **PAC** n'est pas en mesure de répondre seule à la consigne de chauffage, dans ce cas la chaudière est pilotée de façon standard sans influencer le cyclage de la **PAC.**

Les deux régimes correspondant à un écart supérieur à la valeur Δ sont des régimes de régulation classiques d'un système de chauffage hybride.

De manière à avoir accès aux températures seuil, il est possible d'utiliser une cartographie de la pompe à chaleur. Cette cartographie peut être une donnée du constructeur indiquant l'ensemble des points de fonctionnement de la pompe à chaleur en fonction de paramètres extérieurs comme par exemple la consigne thermique à atteindre, la température extérieure ou le débit de fluide traversant la pompe à chaleur. Cette cartographie peut par exemple permettre une identification aisée par un régulateur d'un coefficient de performance courant de la pompe à chaleur **PAC,** correspondant à un point de fonctionnement courant de cette dernière. Notamment, si une telle cartographie a été réalisée, l'obtention des températures seuil **THR_PT** peut se faire facilement avec uniquement la connaissance d'un coefficient de performance seuil de la pompe à chaleur **PAC,** et des conditions instantanées à la source froide.

Ce procédé peut s'appliquer dans différentes configurations de systèmes hybrides. Par exemple, il est possible d'appliquer le procédé à des systèmes comprenant un circuit fluidique unique reliant en parallèle ou en série la pompe à chaleur **PAC** et la chaudière à combustion **COMB_H,** en vue de chauffer une pièce ou le circuit d'eau chaude sanitaire d'un immeuble.

Il peut aussi être envisagé l'utilisation de deux circuits fluidiques séparés pour, d'une part, la pompe à chaleur **PAC** et, d'autre part, la chaudière à combustion **COMB_H.** Dans un tel cas, la pièce à chauffer ou bien le circuit d'eau chaude sanitaire assure le couplage entre le fonctionnement de la pompe à chaleur **PAC** et celui de la chaudière à combustion **COMB_H.**

Le procédé peut impliquer différents types de pompes à chaleur **PAC:** air/air, air/eau ou eau/eau, et dont le compresseur fonctionne à vitesse fixe ou bien à vitesse variable. Le fluide circulant dans la pompe à chaleur **PAC** et la chaudière à combustion **COMB_H** peut aussi bien être un gaz qu'un liquide.

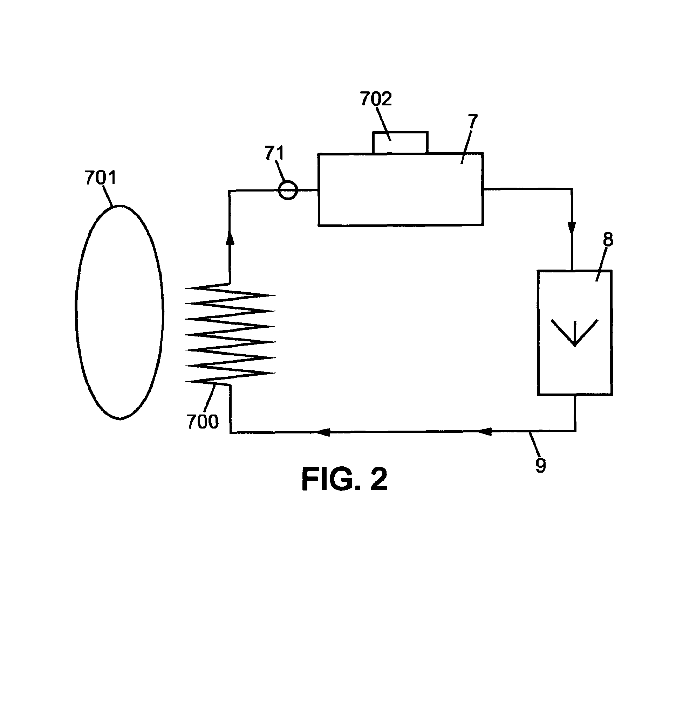

Dans la suite de l'exposé, et à titre d'exemple, il sera considéré un système de chauffage hybride tel qu'illustré sur la figure 2, comprenant un seul circuit fluidique **9** reliant en série la pompe à chaleur **7** à la chaudière à combustion **8.** Ce système de chauffage hybride fournit de la chaleur à une pièce **701** par l'intermédiaire d'un échangeur thermique **700.** Le procédé est avantageusement mis en oeuvre par un régulateur **702,** représenté sur la figure 2 comme étant adjoint à la pompe à chaleur 7. Ce régulateur **702** peut néanmoins être constitué de plusieurs éléments disposés à différents endroits du système de chauffage, ou être un unique élément rattaché à un autre composant du système, comme par exemple la chaudière à combustion **8** ou être physiquement indépendant de la **PAC 7** et de la chaudière à combustion **8.** Un capteur de température **71** peut avantageusement être prévu en amont de la pompe à chaleur 7.

Le régulateur **702** peut également être inclus dans la PAC 7, et disposer d'une sortie pour le contrôle d'une chaudière à combustion **8.** Ce mode de réalisation présente des avantages dans le cas de l'installation d'une PAC 7 sur une installation de chauffage en relève d'une chaudière existante.

Dans une configuration plus perfectionnée du procédé, la régulation selon l'invention peut avantageusement opérer selon deux modes de réalisation complémentaires en fonction de la valeur et du signe de la différence entre la température seuil **3** et la température cible **1.**

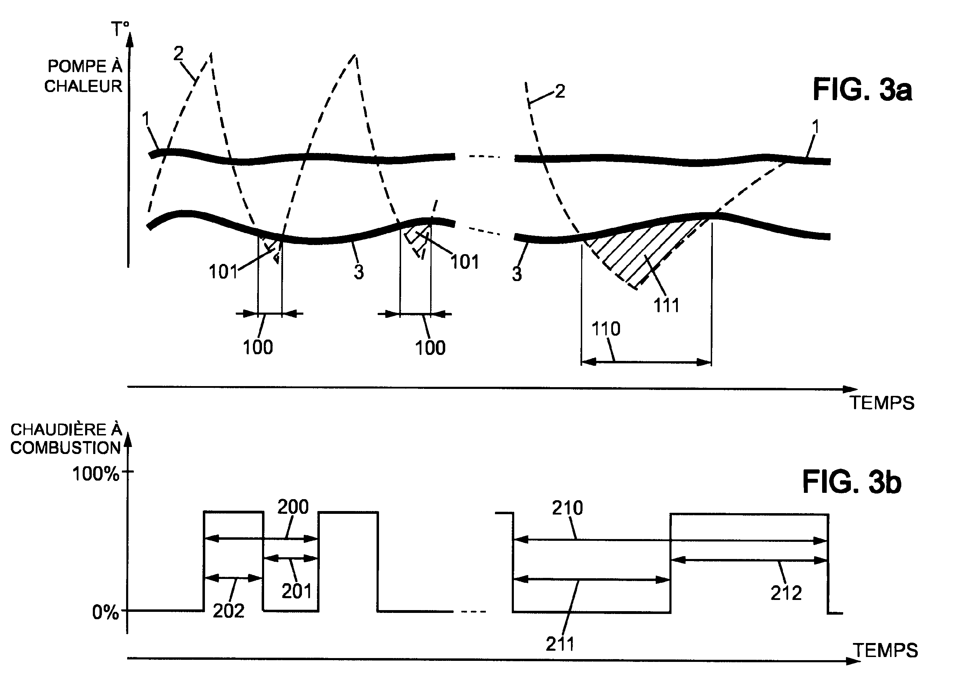

Comme illustré sur la figure 3a, le fonctionnement par intermittence de la chaudière à combustion **8** provoque des oscillations de la température instantanée **2** en amont de la pompe à chaleur **7.**

Lorsque la température seuil **3** est inférieure à la température cible **1,** c'est-à-dire lorsque la différence entre la température seuil **3** et la température cible **1** est négative et que cet écart est inférieur à un premier seuil $\Delta_1$, la température instantanée **2** peut osciller autour de la température seuil **3,** ce qui peut inciter à une alternance des phases de marche **202** et d'arrêt **201** de la chaudière à combustion **8.** Le premier seuil $\Delta_1$ peut avantageusement être égal au seuil Δ mentionné précédemment, ou y être inférieur. Les cycles de la chaudière à combustion **8** peuvent avoir une certaine périodicité **200.** La température instantanée **2** peut également descendre en-dessous de la température seuil **3** pendant de brefs instants **100.** Le premier seuil $\Delta_1$ peut par exemple être choisi en fonction de l'amplitude maximale et de la période maximale des oscillations de la température instantanée **2** générées par un cyclage de la chaudière à combustion **8.** La détermination des valeurs de ces amplitudes et périodes maximales sont à la portée de l'Homme du métier, et peuvent typiquement être comprises entre 5 K et 20 K pour l'amplitude et entre 20 minutes et 90 minutes pour la période. Le choix du premier seuil $\Delta_1$ se porte avantageusement sur une valeur légèrement inférieure à cette amplitude, typiquement une valeur correspondant à un pourcentage compris entre 60% et 90% de cette amplitude maximale pour garantir un fonctionnement suffisamment long de la pompe à chaleur **7** dans les creux des oscillations de la température instantanée **2.**

Ces durées **100** sont représentées sur la figure 3a par les zones **101.** Lorsque les durées d'activation **100** de la pompe à chaleur **7** sont brèves, l'énergie électrique alimentant la PAC n'est pas efficacement utilisée. Outre ce gaspillage, des permutations rapprochées entre des phases de marche et d'arrêt peuvent endommager la pompe à chaleur **7**.

Il est alors avantageux de rallonger les durées **100** pendant lesquelles la pompe à chaleur **7** est active. Pour ce faire, comme représenté sur la figure 3b, le procédé propose de rallonger les durées **211** pendant lesquelles la chaudière à combustion **8** est inactive, ou bien diminuer l'allure de la chaudière à combustion **8**. Ceci peut paraître contre-intuitif au premier abord car ce faisant, la température instantanée aura tendance à diminuer et s'écarter de la température cible **1**. Cependant, la durée **110** pendant laquelle la température instantanée est inférieure à la température seuil en sera également augmentée. La zone **111** correspondante étant plus grande que les zones **101** précédant ce cyclage forcé de la chaudière à combustion **8,** la pompe à chaleur **7** peut alimenter la pièce **701** en chaleur pendant une durée **110** plus longue. De cette manière, le système de chauffage hybride permet de réaliser des économies, par exemple d'énergie, en fournissant une part plus importante d'énergie issue de la pompe à chaleur **7,** dans des conditions plus rentables que si elle avait été fournie par la chaudière à combustion **8**.

Il est à noter que le rapport cyclique des phases de fonctionnement de la chaudière à combustion **8** pourrait être modifié. Lorsque ce rapport cyclique n'est pas modifié, la période **210** est augmentée mais le ratio des durées des phases de marche **212** sur les durées des phases d'arrêt **211** reste pratiquement inchangé par rapport à celui précédant le cyclage forcé. Ce ratio peut diminuer d'un pourcentage compris entre 1% et 40% du fait de la chaleur fournie par la **PAC 7** en cyclage forcé, réduisant le besoin d'apport de chaleur au niveau de la chaudière à combustion **8**.

Un cas de figure non représenté sur la figure 3a peut également faire intervenir un cyclage forcé de la chaudière à combustion **8** lorsque la différence entre la température seuil **3** et la température cible **1** est négative et cet écart est inférieur à un premier seuil $\Delta_1$. En effet, dans certains cas de figure, la température instantanée **2** peut être en permanence au-dessus de la température seuil **3,** avant la mise en oeuvre du procédé. L'augmentation de l'amplitude des oscillations de la température instantanée **2** par cyclage forcé permet ainsi de créer des phases **111** pendant lesquelles la température instantanée **2** descend en-dessous de la température seuil **3,** permettant à la **PAC 7** de se mettre en marche.

Lorsque la différence entre la température seuil **3** et la température cible **1** est positive, mais avec un écart faible, c'est-à-dire inférieur à un troisième seuil $\Delta_3$, il convient également de mettre en oeuvre un cyclage forcé afin de rallonger les phases de fonctionnement de la PAC 7. Le troisième seuil $\Delta_3$ peut par exemple être choisi en fonction de l'amplitude des oscillations de la température instantanée **2** générées par la chaudière à combustion **8** lorsque cette dernière fonctionne par intermittence avec un cyclage à une fréquence maximale. Un tel troisième seuil peut dépendre de l'installation et de la technologie de chaudière à combustion **8** utilisée, et peut typiquement correspondre à des valeurs comprises entre 0,5 et 6 Kelvin.

Selon un mode de réalisation complémentaire, lorsque la différence entre la température seuil **3** et la température cible **1** est positive et avantageusement comprise dans un intervalle de valeurs entre le troisième seuil $\Delta_3$ et un second seuil $\Delta_2$, il est possible d'agir sur le cyclage de la chaudière à combustion **8** en vue de rallonger les phases de fonctionnement de la pompe à chaleur **7** afin de la maintenir active en permanence. Le second seuil $\Delta_2$ peut avantageusement être égal au seuil $\Delta$ défini précédemment ou y être inférieur. Les premier $\Delta_1$ et second $\Delta_2$ seuils peuvent ainsi ne pas être égaux, mais l'un d'entre eux est avantageusement égal au seuil $\Delta$ précédemment défini. Le second seuil $\Delta_2$ peut par exemple être choisi en fonction de l'amplitude des oscillations de la température instantanée **2** générées par la chaudière à combustion **8** lorsque cette dernière fonctionne par intermittence à une fréquence usuelle, lorsque ladite chaudière est utilisée seule en visant un compromis entre confort, performance et longévité. Un tel second seuil peut typiquement correspondre à des valeurs comprises entre 2 et 13 Kelvin.

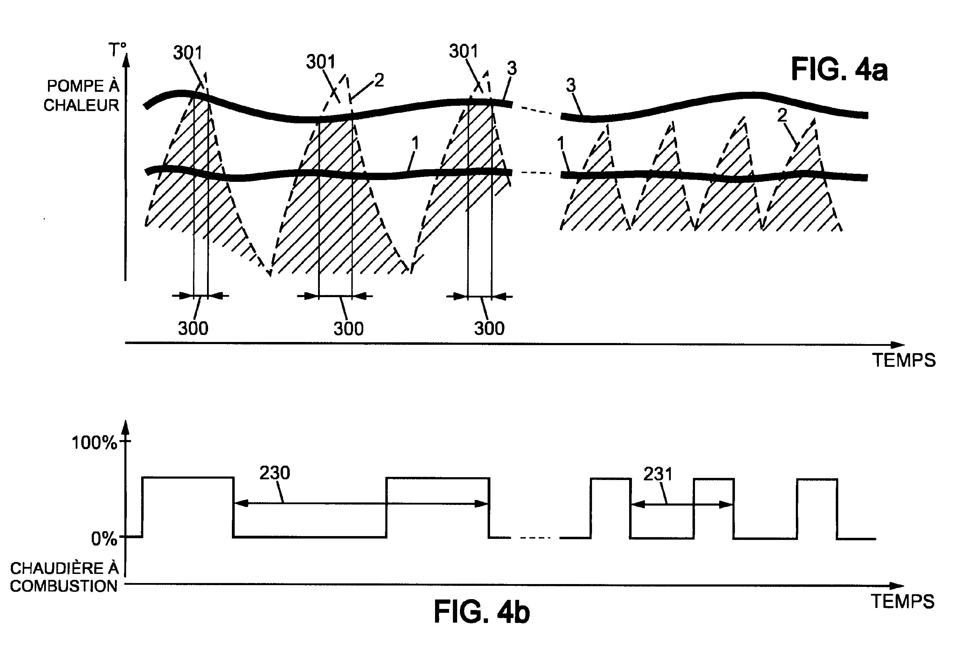

Comme représenté sur la figure 4a, la température instantanée **2** subit des oscillations provoquées par un fonctionnement par intermittence ou cyclé de la chaudière à combustion **8**. La pompe à chaleur 7 est active la plupart du temps à l'exception des brefs instants **300** pendant lesquels la température instantanée **2** est supérieure à la température seuil **3**. Ces durées correspondent sur la figure 4a aux zones **301**. La chaudière à combustion **8** peut être en régime permanent ou bien alterner des phases de marche et d'arrêt selon un certaine période **230**. Le procédé propose alors d'induire une diminution de l'amplitude des oscillations de la température instantanée **2** en commandant la chaudière à combustion **8** selon un régime de cyclage accéléré, c'est-à-dire en diminuant la durée **231** des périodes des cycles de mise en marche et d'arrêt de la chaudière à combustion **8,** comme représenté sur la figure 4b.

Selon d'autres variantes de réalisation, le pilotage en cyclage forcé ou accéléré de la chaudière à combustion **8** peut s'opérer non pas en augmentant la durée des phases d'arrêt **211** ou en réduisant les périodes de fonctionnement **231,** mais en faisant varier la puissance thermique délivrée par la chaudière à combustion **8** lorsque cette dernière possède plusieurs réglages ou allures. Ainsi, il est possible de ne pas éteindre complètement la chaudière à combustion **8,** ce qui permet de réduire les pertes thermiques dues aux délais inhérents à la mise en marche de la chaudière à combustion avant d'atteindre une température cible. Un régulateur d'allures apte à piloter la chaudière à combustion sur chaque allure de fonctionnement peut alors être prévu sur ou à proximité de la chaudière.

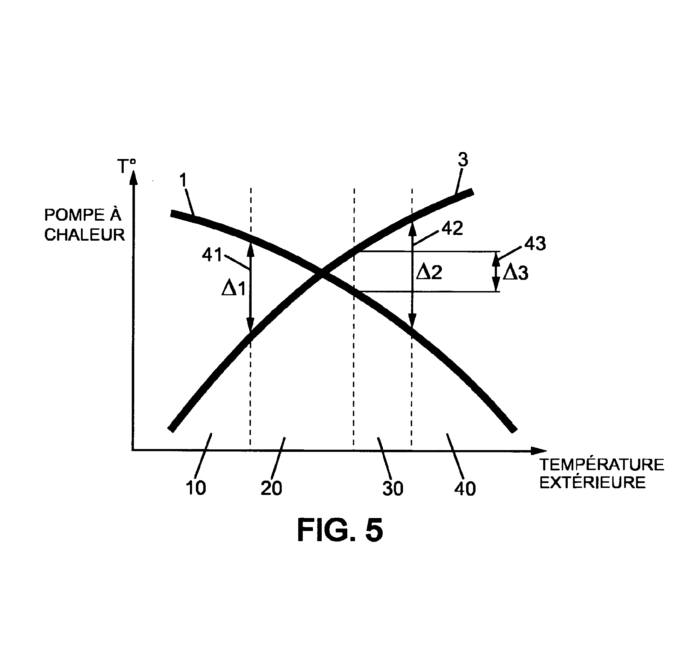

Afin de résumer les différents régimes de fonctionnement proposés par le procédé de régulation, les figures 5 à 7 illustrent synthétiquement quatre régimes différents de pilotage du système de chauffage hybride.

Tel qu'illustré sur la figure 5, les températures seuil **3** et cible **1** en amont de la pompe à chaleur **7** évoluent de manière différente en fonction d'une température extérieure, par exemple la température de l'air à l'extérieur du bâtiment à chauffer, arrivant côté source froide sur une pompe à chaleur air/eau ou air/air. Cette température extérieure correspond à l'axe des abscisses sur le graphique de la figure 5. Lorsqu'une consigne thermique est indiquée au système de chauffage hybride, une loi d'eau est utilisée pour calculer la température cible **1**. La puissance thermique à fournir par le système est alors prévue pour compenser les pertes thermiques vers l'extérieur. Il est à noter que la température cible 1 peut être évaluée par un régulateur **702** de différentes manières, à partir par exemple d'une loi d'eau dépendant d'une température extérieure, ou bien d'une loi d'eau faisant en outre intervenir une température ambiante, ou l'ensoleillement. Des capteurs supplémentaires peuvent intervenir afin de fournir les données nécessaires au calcul d'une température cible **1** par un régulateur **702**.

Ainsi, la température cible **1** diminue à mesure que la température extérieure augmente, traduisant ainsi un besoin d'apport de chaleur plus faible lorsque la température extérieure est plus élevée. Inversement, la température seuil **3** augmente lorsque la température extérieure augmente. Tel qu'illustré sur la figure 5, il est possible de distinguer quatre régimes de fonctionnement **10, 20, 30, 40** dans le procédé de régulation.

Le régime **10** correspond au cas où la température cible 1 est plus grande que la température seuil **3**, et avec un écart supérieur au premier seuil **41**, $\Delta_1$. Le fonctionnement de la pompe à chaleur **7** n'étant pas rentable, la chaudière à combustion **8** répond seule à la consigne de chauffage. Le premier seuil **41**, $\Delta_1$ peut par exemple être compris entre 5 K et 20 K.

Le régime **40** correspond au cas dans lequel la température cible 1 est plus petite que la température seuil **3**, et avec un écart supérieur au second seuil **42**, $\Delta_2$. Le fonctionnement de la pompe à chaleur **7** étant plus rentable que celui de la chaudière à combustion **8**, la pompe à chaleur **7** répond à la consigne de chauffage seule, ou bien conjointement avec la chaudière à combustion **8** lorsque la pompe à chaleur **7** n'est pas en mesure de répondre seule à la consigne de chauffage. Le second seuil **42**, $\Delta_2$ peut par exemple être compris entre 2 K et 13 K.

Le régime **20** correspond au cas où, la température cible **1** est supérieure à la température seuil **3**, mais l'écart entre ces deux températures est inférieur au premier seuil $\Delta_1$. Ce régime comprend avantageusement en outre le cas où la température cible **1** est inférieure à la température seuil **3** et l'écart entre ces deux températures est inférieur à un troisième seuil **43**, $\Delta_3$. Le procédé optimise la régulation en commandant la chaudière à combustion **8** selon un régime de fonctionnement par intermittence en cyclage forcé, afin d'augmenter la période et l'amplitude des oscillations de la température instantanée **2**.

Le régime **30** correspond au cas où, la température cible **1** est inférieure à la température seuil **3**, mais l'écart entre ces deux températures est inférieur au second seuil **42**, $\Delta_2$ et avantageusement supérieur au troisième seuil **43**, $\Delta_3$. Le procédé optimise la régulation en commandant la chaudière à combustion **8** selon un régime de fonctionnement par intermittence en cyclage accéléré, afin de réduire l'amplitude des oscillations de la température instantanée **2**.

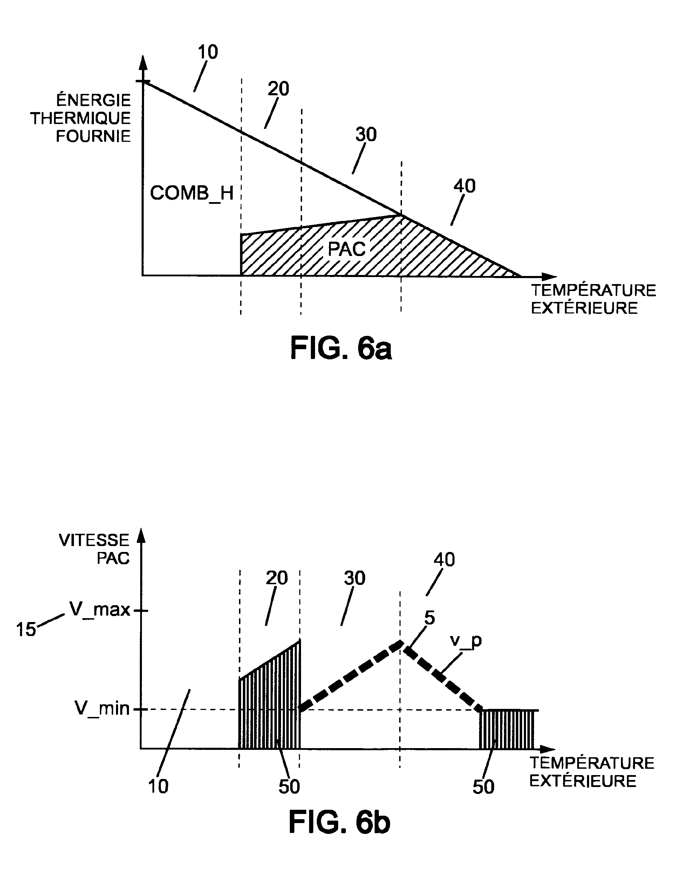

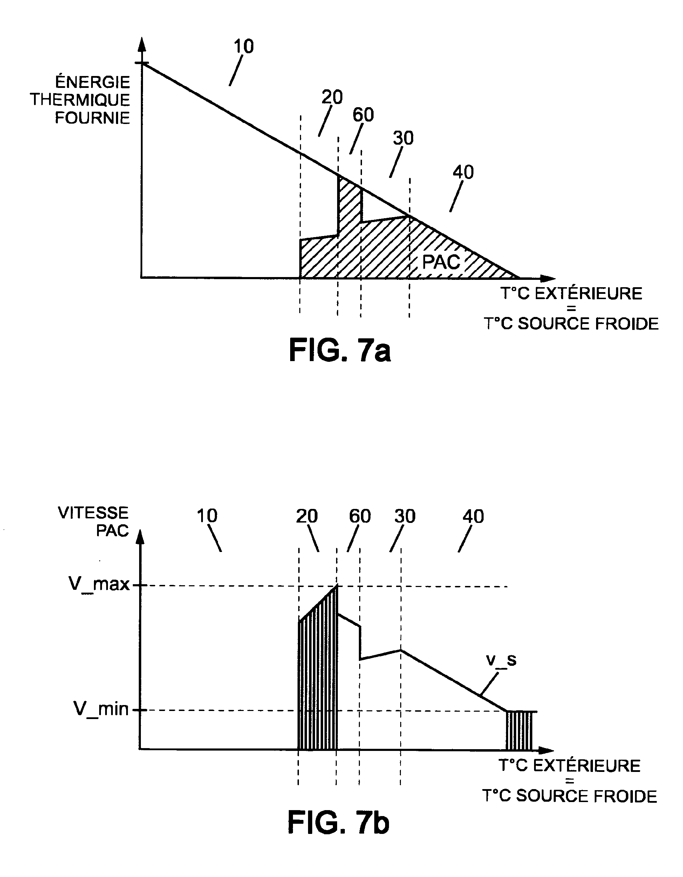

Le procédé décrit ci-avant s'applique aussi bien aux pompes à chaleur **7** possédant un compresseur à vitesse fixe qu'à celles possédant un compresseur à vitesse variable. Ci-après, en référence aux figures 6 et 7, il sera décrit deux modes de réalisation particulièrement avantageux pour piloter des pompes à chaleur **7** dont le compresseur est à vitesse variable. Les représentations des figures 5 à 7 sont simplifiées en ce qu'elles représentent un état statique du système hybride pour chaque valeur de température extérieure représentée. Une observation réelle du système impliquerait des phénomènes dynamiques plus complexes faisant notamment intervenir des oscillations dans la vitesse du compresseur de la pompe à chaleur **7**. Par ailleurs, le fonctionnement d'un système de chauffage hybride est en réalité plus complexe que représenté sur les figures 6 et 7 en ce qu'il peut par exemple dépendre, en plus d'une température extérieure, du choix d'un objectif de régulation du système ou de la température intérieure dans le bâtiment.

La figure 6a représente sur un graphique l'énergie thermique fournie par le système de chauffage hybride, en distinguant l'énergie fournie par la chaudière à combustion **8**, COMB_H de celle fournie par la pompe à chaleur **7**, PAC. Il apparaît ici que seuls les régimes **20** et **30** supposent un fonctionnement simultané de la chaudière à combustion **8** et de la pompe à chaleur **7**.

La figure 6b indique les variations d'une première vitesse **5**, **v_p** avantageuse pour piloter le compresseur de la pompe à chaleur **7**, PAC. Cette première vitesse **5**, **v_p** est une vitesse calculée par le régulateur **702** du système de chauffage hybride de manière à réduire au maximum un paramètre de coût. Ce paramètre est fonction d'un objectif de régulation indiqué au système. Le coût peut par exemple être la facture d'énergie, la consommation d'énergie, l'émission de gaz à effet de serre, ou la part d'énergie non renouvelable. Ce paramètre coût C peut être défini à partir des facteurs F(elec) et F(comb) définis précédemment, ainsi qu'en fonction de la puissance P(comb) consommée par la chaudière à combustion **8** et la puissance P(elec) consommée par la pompe à chaleur 7 selon la relation suivante :

$$C = P(comn)F(comb) + P(elec)F(elec)$$

Comme indiqué sur la figure 6b, la première vitesse **5**, **v_p** comprend une phase montante dans le régime **30,** et une phase descendante dans le régime **40.** De part et d'autre de ces deux phases, la pompe à chaleur **7** est en régime cyclé, c'est-à-dire qu'elle fonctionne par intermittence dans les zones indiquées par les hachures **50,** lorsque la chaleur à fournir est inférieure à la chaleur minimale que la pompe à chaleur peut fournir en étant active ou lorsque la chaudière à combustion **8** fonctionne en cyclage forcé dans le régime **20** décrit précédemment.

La première vitesse **5, v_p** est avantageusement calculée à partir d'un coefficient de performance seuil C(thr) à l'aide de la formule suivante :

$$\left. \frac{dP(th\_PAC)}{dP(elec\_PAC)} \right|_{v\_p} = C(thr)$$

où P(th_PAC) désigne la puissance thermique délivrée par la pompe à chaleur **7,** P(elec_PAC) désigne la puissance électrique consommée par la pompe à chaleur **7.** Avantageusement, ce calcul est effectué dans un circuit compris dans le régulateur **702** mettant en oeuvre le procédé.

La figure 7a représente sur un graphique l'énergie thermique fournie par le système de chauffage hybride, en distinguant l'énergie fournie par la chaudière à combustion **8, COMB_H** et celle fournie par la pompe à chaleur **7, PAC.** Contrairement au mode de réalisation de la figure 6, il existe un régime **60** adjacent au régime **20,** caractérisé par le fait que la PAC fournit seule la totalité de l'énergie thermique alors que, dans les conditions de fonctionnement correspondantes, dans le mode de réalisation des figures 6a et 6b, le système est opéré dans un régime de cogénération de chaleur.

Comme indiqué sur la figure 7b, le type de régulation représenté sur la figure 7a correspond à un pilotage du compresseur de la pompe à chaleur 7 à une seconde vitesse **6, v_s.** Cette vitesse est égale à la première vitesse **5, v_p** telle que décrite ci-avant, sauf dans le cas particulier où la pompe à chaleur **7** est capable de répondre seule au besoin thermique, lorsque son utilisation est rentable et lorsque le fonctionnement de la chaudière à combustion **8** entrainerait autrement un cyclage de la pompe à chaleur **7.** L'intérêt d'utiliser la seconde vitesse **6, v_s** réside dans le fait qu'elle permet d'éviter de cycler la pompe à chaleur **7** pendant une partie du régime qui, sur des critères de rentabilité stricts, inviterait l'utilisateur à adopter un cyclage forcé pour la chaudière à combustion **8.** Bien que non représenté sur la figure 7b, la seconde vitesse **6, v_s** peut atteindre la vitesse maximale **15.**

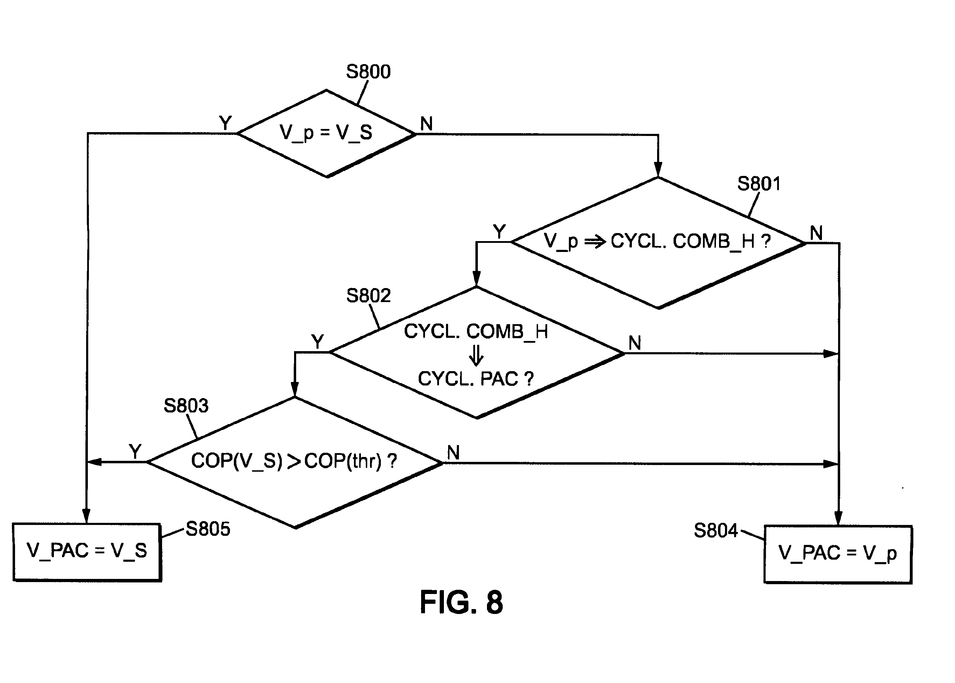

La figure 8 présente un ordinogramme résumant les différentes conditions permettant de choisir la vitesse **v_pac** du compresseur de la pompe à chaleur **7** dans le second mode de réalisation présenté.

Si la seconde vitesse **v_s** est égale à la première vitesse **v_p,** condition vérifiée à l'étape **S800,** alors le compresseur est piloté à la seconde vitesse **v_s** à l'étape **S805.**

Sinon, l'étape **S801** consiste à vérifier si le pilotage du compresseur à **v_p** entraîne un cyclage de la chaudière à combustion. Si tel n'est pas le cas, alors **v_pac=v_p** à l'étape **S804.**

Si le pilotage du compresseur à **v_p** entraîne un cyclage de la chaudière à combustion **8** alors il convient de vérifier à l'étape **S802** si le cyclage de la chaudière à combustion **8** entraîne un cyclage de la pompe à chaleur **7.** Si ce n'est pas le cas, le procédé exécute l'étape **S804.** Dans le cas contraire, le procédé vérifie à l'étape **S803** si le coefficient de performance **COP(v_s)** de la pompe à chaleur **7** pilotée à **v_s** est supérieur au coefficient de performance seuil **COP(thr).** Si la réponse est oui, le procédé exécute l'étape **S805,** sinon il exécute l'étape **S804.**

Le pilotage de la chaudière à combustion **8** peut avantageusement être commandé selon deux logiques différentes. La première, correspondant aux exemples décrits ci-avant, consiste à moduler la durée des phases de marche **202, 212** et d'arrêt **201, 211** de la chaudière à combustion **8,** ou, de manière équivalente, à moduler la permutation entre allures de la chaudière à combustion **8.** Ainsi, le régulateur **702** peut calculer de façon dynamique, en temps réel, les durées adéquates de marche **202, 212** et d'arrêt **201, 211** de la chaudière à combustion **8,** permettant d'induire le fonctionnement recherché de la pompe à chaleur **7** tel que décrit précédemment.

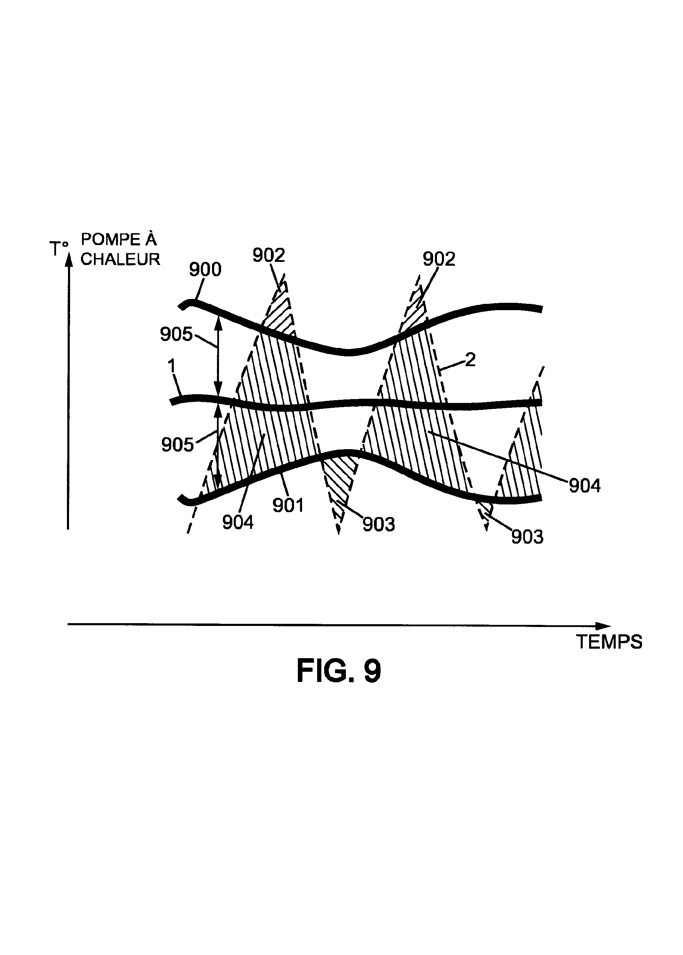

Selon un mode de réalisation complémentaire, et tel que représenté sur la figure **9,** il est possible de définir de façon dynamique, à chaque instant, une bande de températures, dite bande morte, centrée sur la température cible **1** délimitée par une borne inférieure **901** et une borne supérieure **900.** Cette bande de températures a une largeur qui dépend de l'écart **905** entre la température cible **1** et la température seuil **3.** Le principe de pilotage représenté sur la figure 9 consiste à limiter une amplitude trop importante dans l'oscillation de la température instantanée **2.** Ainsi, lorsque la température instantanée **2** traverse la borne supérieure **900** de la bande morte pour arriver dans la zone **902,** la chaudière à combustion **8** est mise à l'arrêt si elle ne l'était pas déjà, empêchant ainsi une élévation non souhaitée de la température instantanée **2.** Lorsque la température instantanée **2** se situe à l'intérieur de la bande morte, l'état de la chaudière à combustion n'est pas modifié. Symétriquement, lorsque la température instantanée **2** traverse la borne inférieure **901** de la bande morte, la chaudière à combustion **8** est mise en marche si elle ne l'était pas déjà, empêchant ainsi une diminution non souhaitée de la température instantanée **2.** La largeur de la bande morte varie au cours du temps en augmentant lorsque la chaudière à combustion **8** est commandée en cyclage forcé, et en diminuant lorsque la chaudière à combustion **8** est commandée en cyclage accéléré.

L'invention ne se limite pas aux modes de réalisation décrits ci-avant, et peut comprendre des modes de réalisation équivalents.

Notamment, comme évoqué précédemment, il est envisageable de mettre en oeuvre le même procédé en utilisant à la place d'une température, un paramètre autre tel le débit de fluide, une pression de fluide ou un rendement de la pompe à chaleur.

La mise en oeuvre du procédé de régulation peut faire intervenir des chaudières à combustion électriques, ou tout autre dispositif de chauffage connu de l'Homme du métier et utilisé dans le chauffage de bâtiments.

**Revendications**

1. Procédé de régulation d'un système de chauffage hybride comportant au moins:

   - une pompe à chaleur (7), et
   - une chaudière à combustion (8),

   ledit procédé comprenant les étapes suivantes:

   - obtenir (S1) une valeur d'un point de fonctionnement cible (1) du système, et
   - déterminer (S1) une valeur d'un point de fonctionnement seuil (3) de la pompe à chaleur (7), le franchissement dudit point de fonctionnement seuil (3) entrainant une permutation du régime de fonctionnement de la pompe à chaleur (7) entre un état actif et un état inactif,

   le procédé étant **caractérisé en ce qu'**il comprend en outre l'étape suivante :

   - commander (S3) la chaudière à combustion (8) selon un régime de fonctionnement par intermittence lorsque l'écart (S2) entre la valeur dudit point de fonctionnement seuil (3) et la valeur dudit point de fonctionnement cible (1) est inférieur à une valeur choisie (4).

2. Procédé de régulation selon la revendication 1, **caractérisé en ce que,** le système comprenant un circuit fluidique (9) reliant la pompe à chaleur (7) à la chaudière à combustion (8) et un capteur de température (71) situé dans le circuit fluidique (9) en amont de la pompe à chaleur (7), la valeur du point de fonctionnement cible (1) est définie par une température cible (1) dans le circuit fluidique (9) en amont de la pompe à chaleur (7) et la valeur du point de fonctionnement seuil (3) est définie par une température seuil (3) dans le circuit fluidique (9) en amont de la pompe à chaleur (7), la pompe à chaleur (7) étant mise à l'arrêt lorsqu'une température instantanée (2) mesurée par le capteur de température (71) est supérieure à ladite température seuil (3).

3. Procédé de régulation selon la revendication 2, **ca-**ractérisé en ce qu'il comprend en outre :

   - obtenir un coefficient de performance seuil de la pompe à chaleur (7), la température seuil (3) étant fonction dudit coefficient de performance seuil, ladite température seuil formant ladite valeur de point de fonctionnement seuil.

4. Procédé de régulation selon l'une quelconque des revendications 2 à 3, **caractérisé en ce que,** la chaudière à combustion (8) comprenant un régulateur d'allures apte à piloter la chaudière à combustion sur au moins une première allure de fonctionnement et une seconde allure de fonctionnement de puissance supérieure à la première allure de fonctionnement, le fonctionnement par intermittence de la chaudière à combustion (8) comprend :

   - modifier par intermittence des allures de fonctionnement de la chaudière à combustion (8).

5. Procédé de régulation selon la revendication 4, **caractérisé en ce que,** lorsque la différence entre la température seuil (3) et la température cible (1) est négative et l'écart entre lesdites températures seuil (3) et cible (1) est inférieur à un premier seuil (41), et lorsque ladite différence est positive et inférieure à un troisième seuil (43), le fonctionnement par intermittence de la chaudière à combustion (8) comprend :

   - commander (S3) la chaudière à combustion (8) selon un mode de fonctionnement en cyclage forcé (20), ledit cyclage forcé (20) comprenant le rallongement d'au moins un paramètre parmi des phases d'arrêt (201, 211) de la chaudière à combustion (8) et des phases de fonctionnement à une première allure de la chaudière à combustion (8).

6. Procédé de régulation selon l'une quelconque des revendications 4 ou 5, **caractérisé en ce que,** lorsque la différence entre la température seuil (3) et la température cible (1) est positive et supérieure à un troisième seuil (43) et lorsque ladite différence est positive et inférieure à un deuxième seuil (42), le fonctionnement par intermittence de la chaudière à combustion (8) comprend :

   - commander (S3) la chaudière à combustion (8) selon un mode de fonctionnement en cyclage accéléré (30), ledit cyclage accéléré (30) comprenant le raccourcissement d'au moins un paramètre parmi des phases de marche et d'arrêt de la chaudière à combustion (8) et des phases de fonctionnement à une première allure et à une seconde allure de puissance supérieure à la première allure de la chaudière à combustion (8).

**7.** Procédé de régulation selon l'une quelconque des revendications 4 à 6, **caractérisé en ce que** la commande de la chaudière à combustion (8) selon un régime de fonctionnement par intermittence comprend :

- calculer au moins un paramètre parmi une durée de mise en marche (202, 212) et une durée de fonctionnement à une seconde allure de la chaudière à combustion (8) et au moins un paramètre parmi une durée de mise à l'arrêt (201, 211) et une durée de fonctionnement à une première allure de puissance inférieure à la puissance de la seconde allure de la chaudière à combustion (8), lesdites durées étant calculées de façon dynamique en fonction de la valeur de l'écart entre la température seuil (3) et la température cible (1).

**8.** Procédé de régulation selon l'une quelconque des revendications 4 à 7, **caractérisé en ce que** la commande de la chaudière à combustion (8) selon un régime de fonctionnement par intermittence comprend :

- définir une bande de températures centrée sur la température cible (1), dont la largeur est fonction de l'écart (905) entre la température seuil (3) et la température cible (1);
- effectuer au moins une étape parmi mettre en marche la chaudière à combustion (8) et commander la chaudière à combustion (8) à une seconde allure, lorsque la température instantanée (2) en amont de la pompe à chaleur (7) est inférieure aux températures (901) de ladite bande; et
- effectuer au moins une étape parmi arrêter la chaudière à combustion (8) et commander la chaudière à combustion (8) à une premier allure de puissance inférieure à la puissance de la seconde allure lorsque ladite température instantanée (2) est supérieure aux températures (900) de ladite bande.

**9.** Procédé de régulation selon l'une des revendications précédentes, **caractérisé en ce qu**'il comprend :

- choisir un type de fonctionnement du système respectant au moins l'une des contraintes parmi une réduction de la consommation d'énergie, une réduction des coûts de consommation, une réduction de l'émission de gaz à effets de serre, ledit type de fonctionnement définissant un coefficient de performance seuil $C_{thr}$ de la pompe à chaleur relié au rendement du générateur à combustion, le coefficient de performance seuil correspond au rendement de la pompe à chaleur en-dessous duquel la pompe à chaleur devient moins rentable que la chaudière à combustion.

**10.** Procédé de régulation selon la revendication 9, **caractérisé en ce qu**'il comprend un calcul d'une première vitesse (5) v_p d'un compresseur à vitesse variable de la pompe à chaleur (7), ladite première vitesse (5) étant calculée à partir du coefficient de performance seuil $C_{thr}$ de la pompe à chaleur (7) à l'aide de la formule suivante :

$$\left.\frac{dP_{th\_PAC}}{dP_{elec\_PAC}}\right|v\_p = C_{thr}$$

où $P_{th\_PAC}$ désigne la puissance thermique délivrée par la pompe à chaleur (7), $P_{elec\_PAC}$ désigne la puissance électrique consommée par la pompe à chaleur (7).

**11.** Procédé de régulation selon la revendication 10, **caractérisé en ce que** le compresseur est commandé pour atteindre la première vitesse (5).

**12.** Procédé de régulation selon l'une quelconque des revendications 10 ou 11, **caractérisé en ce qu**'il comprend en outre :

- calculer une seconde vitesse (6) pour le compresseur de la pompe à chaleur (7) ; ladite seconde vitesse (6) étant une vitesse permettant à la pompe à chaleur (7) d'atteindre ledit point de fonctionnement cible (1) du système tout en maintenant la chaudière à combustion (8) à l'arrêt, et
- piloter le compresseur pour atteindre la seconde vitesse (6) dans les conditions suivantes:

- la chaudière à combustion (8) étant à l'arrêt pour éviter un fonctionnement par intermittence de la pompe à chaleur (7),, la pompe à chaleur (7) est apte à atteindre ledit point de fonctionnement cible (1) du système, et
- un coefficient de performance courant de la pompe à chaleur (7) est supérieur au coefficient de performance seuil.

**13.** Régulateur (702) d'un système de chauffage hybride, ledit système comportant au moins:

- une pompe à chaleur (7), et
- une chaudière à combustion (8),

ledit régulateur (702) comprenant un circuit permettant:

- d'obtenir une valeur d'un point de fonctionnement cible (1) du système,
- de déterminer une valeur d'un point de fonctionnement seuil (3) de la pompe à chaleur (7), le franchissement dudit point de fonctionnement seuil (3) entrainant une permutation du régime de fonctionnement de la pompe à chaleur (7) entre un état actif et un état inactif, **caractérisé en ce que** ledit circuit permet de commander la chaudière à combustion (8) selon un régime de fonctionnement par intermittence lorsque l'écart entre la valeur dudit point de fonctionnement seuil (3) et la valeur dudit point de fonctionnement cible (1) est inférieur à une valeur choisie (4).

14. Système de chauffage hybride comprenant un régulateur (702) selon la revendication 13, comprenant :

- une pompe à chaleur (7); et
- une chaudière à combustion (8); et
- un circuit fluidique (9) reliant la pompe à chaleur (7) à la chaudière à combustion (8); et
- un capteur (71).


**Patentansprüche**

1. Verfahren zur Regelung eines Hybrid-Heizsystems, das mindestens aufweist:

- eine Wärmepumpe (7), und
- einen Verbrennungskessel (8),

wobei das Verfahren die folgenden Schritte umfasst:

- Erhalt (S1) eines Werts eines Zielbetriebspunkts (1) des Systems, und
- Bestimmung (S1) eines Werts eines Schwellenbetriebspunkts (3) der Wärmepumpe (7), wobei das Überschreiten des Schwellenbetriebspunkts (3) ein Umschalten der Betriebsart der Wärmepumpe (7) zwischen einem aktiven und einem inaktiven Zustand bewirkt,

wobei das Verfahren **dadurch gekennzeichnet ist, dass** es außerdem den folgenden Schritt umfasst:

- Steuern (S3) des Verbrennungskessels (8) gemäß einer diskontinuierlichen Betriebsart, wenn die Abweichung (S2) zwischen dem Wert des Schwellenbetriebspunkts (3) und dem Wert des Zielbetriebspunkts (1) unter einem gewählten Wert (4) liegt.

2. Regelungsverfahren nach Anspruch 1, **dadurch ge-**

**kennzeichnet, dass**, da das System einen Flüssigkeitskreislauf (9), der die Wärmepumpe (7) mit dem Verbrennungskessel (8) verbindet, und einen Temperaturfühler (71) umfasst, der sich im Flüssigkeitskreislauf (9) stromaufwärts vor der Wärmepumpe (7) befindet, der Wert des Zielbetriebspunkts (1) durch eine Zieltemperatur (1) im Flüssigkeitskreislauf (9) stromaufwärts vor der Wärmepumpe (7) definiert wird, und der Wert des Schwellenbetriebspunkts (3) durch eine Schwellentemperatur (3) im Flüssigkeitskreislauf (9) stromaufwärts vor der Wärmepumpe (7) definiert wird, wobei die Wärmepumpe (7) ausgeschaltet wird, wenn eine vom Temperaturfühler (71) gemessene Augenblickstemperatur (2) höher als die Schwellentemperatur (3) ist.

3. Regelungsverfahren nach Anspruch 2, **dadurch gekennzeichnet, dass** es außerdem umfasst:

- den Erhalt eines Schwellenleistungskoeffizienten der Wärmepumpe (7), wobei die Schwellentemperatur (3) vom Schwellenleistungskoeffizient abhängt, wobei die Schwellentemperatur den Schwellenbetriebspunktwert bildet.

4. Regelungsverfahren nach einem der Ansprüche 2 bis 3, **dadurch gekennzeichnet, dass**, da der Verbrennungskessel (8) einen Stufenregler umfasst, der den Verbrennungskessel auf mindestens eine erste Betriebsart und eine zweite Betriebsart einer höheren Leistung als die erste Betriebsart steuern kann, der diskontinuierliche Betrieb des Verbrennungskessels (8) umfasst:

- das diskontinuierliche Ändern der Betriebsarten des Verbrennungskessels (8).

5. Regelungsverfahren nach Anspruch 4, **dadurch gekennzeichnet, dass**, wenn der Unterschied zwischen der Schwellentemperatur (3) und der Zieltemperatur (1) negativ und die Abweichung zwischen der Schwellentemperatur (3) und der Zieltemperatur (1) niedriger als eine erste Schwelle (41) ist, und wenn der Unterschied positiv und niedriger als eine dritte Schwelle (43) ist, der diskontinuierliche Betrieb des Verbrennungskessels (8) umfasst:

- Steuern (S3) des Verbrennungskessels (8) gemäß einer Betriebsart mit Zwangszyklierung (20), wobei die Zwangszyklierung (20) die Verlängerung mindestens eines Parameters unter Ausschaltphasen (201, 211) des Verbrennungskessels (8) und Betriebsphasen auf einer ersten Stufe des Verbrennungskessels (8) umfasst.

6. Regelungsverfahren nach einem der Ansprüche 4 oder 5, **dadurch gekennzeichnet, dass**, wenn der Unterschied zwischen der Schwellentemperatur (3) und der Zieltemperatur (1) positiv und höher als eine dritte Schwelle (43) ist, und wenn der Unterschied positiv und niedriger als eine zweite Schwelle (42) ist, der diskontinuierliche Betrieb des Verbrennungskessels (8) umfasst:

- Steuern (S3) des Verbrennungskessels (8) gemäß einer Betriebsart mit beschleunigter Zyklierung (30), wobei die beschleunigte Zyklierung (30) die Verkürzung mindestens eines Parameters unter Ein- und Ausschaltphasen des Verbrennungskessels (8) und Betriebsphasen auf einer ersten Stufe und einer zweiten Stufe höherer Leistung als die erste Stufe des Verbrennungskessels (8) umfasst.

7. Regelungsverfahren nach einem der Ansprüche 4 bis 6, **dadurch gekennzeichnet, dass** die Steuerung des Verbrennungskessels (8) gemäß einer diskontinuierlichen Betriebsbedingung umfasst:

- Berechnen mindestens eines Parameters unter einer Einschaltdauer (202, 212) und einer Betriebsdauer auf einer zweiten Stufe des Verbrennungskessels (8) und mindestens eines Parameters unter einer Ausschaltdauer (201, 211) und einer Betriebsdauer auf einer ersten Stufe einer geringeren Leistung als die Leistung der zweiten Stufe des Verbrennungskessels (8), wobei die Dauern dynamisch abhängig vom Wert der Abweichung zwischen der Schwellentemperatur (3) und der Zieltemperatur (1) berechnet werden.

8. Regelungsverfahren nach einem der Ansprüche 4 bis 7, **dadurch gekennzeichnet, dass** die Steuerung des Verbrennungskessels (8) gemäß einer diskontinuierlichen Betriebsart umfasst:

- Definieren eines auf die Zieltemperatur (1) zentrierten Temperaturbereichs, dessen Breite von der Abweichung (905) zwischen der Schwellentemperatur (3) und der Zieltemperatur (1) abhängt;
- Ausführen mindestens eines Schritts unter dem Einschalten des Verbrennungskessels (8) und dem Steuern des Verbrennungskessels (8) auf einer zweiten Stufe, wenn die Augenblickstemperatur (2) stromaufwärts vor der Wärmepumpe (7) niedriger als die Temperaturen (901) des Bereichs ist; und
- Ausführen mindestens eines Schritts unter dem Ausschalten des Verbrennungskessels (8) und dem Steuern des Verbrennungskessels (8) auf einer ersten Stufe geringerer Leistung als die Leistung der zweiten Stufe, wenn die Augenblickstemperatur (2) höher als die Temperaturen (900) des Bereichs ist.

9. Regelungsverfahren nach einem der vorhergehenden Ansprüche, **dadurch gekennzeichnet, dass** es umfasst:

- Wählen einer Betriebsart des Systems, die mindestens einen der Zwänge unter einer Verringerung des Energieverbrauchs, einer Verringerung der Verbrauchskosten, einer Verringerung der Emission von Treibhausgasen berücksichtigt, wobei die Betriebsart einen Schwellenleistungskoeffizienten $C_{thr}$ der Wärmepumpe definiert, der mit dem Wirkungsgrad des Verbrennungsgenerators verbunden ist, wobei der Schwellenleistungskoeffizient dem Wirkungsgrad der Wärmepumpe entspricht, unterhalb dessen die Wärmepumpe weniger rentabel wird als der Verbrennungskessel.

10. Regelungsverfahren nach Anspruch 9, **dadurch gekennzeichnet, dass** es eine Berechnung einer ersten Geschwindigkeit (5) v_p eines Kompressors mit variabler Geschwindigkeit der Wärmepumpe (7) umfasst, wobei die erste Geschwindigkeit (5) ausgehend vom Schwellenleistungskoeffizienten $C_{thr}$ der Wärmepumpe (7) mit Hilfe der folgenden Formel berechnet wird:

$$\frac{dP_{th\_PAC}}{dP_{elec\_PAC}}\bigg| v\_p = C_{thr}$$

wobei $P_{th\_PAC}$ die von der Wärmepumpe (7) gelieferte Wärmeleistung bezeichnet, $P_{elec\_PAC}$ die von der Wärmepumpe (7) verbrauchte elektrische Leistung bezeichnet.

11. Regelungsverfahren nach Anspruch 10, **dadurch gekennzeichnet, dass** der Kompressor gesteuert wird, um die erste Geschwindigkeit (5) zu erreichen.

12. Regelungsverfahren nach einem der Ansprüche 10 oder 11, **dadurch gekennzeichnet, dass** es außerdem umfasst:

- Berechnen einer zweiten Geschwindigkeit (6) für den Kompressor der Wärmepumpe (7); wobei die zweite Geschwindigkeit (6) eine Geschwindigkeit ist, die es der Wärmepumpe (7) ermöglicht, den Zielbetriebspunkt (1) des Systems zu erreichen und dabei den Verbrennungskessel (8) ausgeschaltet zu halten, und
- Steuern des Kompressors, um die zweite Geschwindigkeit (6) unter den folgenden Bedingungen zu erreichen:
- da der Verbrennungskessel (8) ausgeschaltet ist, um einen diskontinuierlichen Betrieb der Wärmepumpe (7) zu vermeiden, kann die Wärmepumpe (7) den Zielbetriebspunkt (1) des Systems erreichen, und
- ein laufender Leistungskoeffizient der Wärmepumpe (7) ist höher als der Schwellenleistungskoeffizient.

13. Regler (702) eines Hybrid-Heizsystems, wobei das System mindestens aufweist:

    - eine Wärmepumpe (7), und
    - einen Verbrennungskessel (8),

    wobei der Regler (702) eine Schaltung aufweist, die ermöglicht:

    - den Erhalt eines Werts eines Zielbetriebspunkts (1) des Systems,
    - das Bestimmen eines Werts eines Schwellenbetriebspunkts (3) der Wärmepumpe (7), wobei das Überschreiten des Schwellenbetriebspunkts (3) ein Umschalten der Betriebsart der Wärmepumpe (7) zwischen einem aktiven Zustand und einem passiven Zustand bewirkt,

    dadurch gekennzeichnet, dass die Schaltung es ermöglicht, den Verbrennungskessel (8) gemäß einer diskontinuierlichen Betriebsart zu steuern, wenn die Abweichung zwischen dem Wert des Schwellenbetriebspunkts (3) und dem Wert des Zielbetriebspunkts (1) unter einem gewählten Wert (4) liegt.

14. Hybrid-Heizsystem, das einen Regler (702) nach Anspruch 13 umfasst, umfassend:

    - eine Wärmepumpe (7); und
    - einen Verbrennungskessel (8); und
    - einen Flüssigkeitskreislauf (9), der die Wärmepumpe (7) mit dem Verbrennungskessel (8) verbindet; und
    - einen Sensor (71).

**Claims**

1. Regulation method of a hybrid heating system comprising at least:

    - a heat pump (7), and
    - a combustion boiler (8),

    said method comprising the following steps:

    - obtaining (S1) a value of a target operating point (1) of the system, and
    - determining (S1) a value of a threshold operating point (3) of the heat pump (7), the crossing of said threshold operating point (3) bringing about a permutation of the operating rate of the heat pump (7) between an active state and an inactive state,

the method being **characterised in that** it further comprises the following step:

    - controlling (S3) the combustion boiler (8) according to an intermittent operating rate when the difference (S2) between the value of said threshold operating point (3) and the value of said target operating point (1) is lower than a chosen value (4).

2. Regulation method according to claim 1, **characterised in that** the system comprising a fluid circuit (9) connecting the heat pump (7) to the combustion boiler (8) and a temperature sensor (71) located in the fluid circuit (9) upstream of the heat pump (7), the value of the target operating point (1) is defined by a target temperature (1) in the fluid circuit (9) upstream of the heat pump (7) and the value of the threshold operating point (3) is defined by a threshold temperature (3) in the fluid circuit (9) upstream of the heat pump (7), the heat pump (7) being stopped when an instantaneous temperature (2) measured by the temperature sensor (71) is higher than said threshold temperature (3).

3. Regulation method according to claim 2, **characterised in that** it further comprises:

    - obtaining a threshold performance coefficient of the heat pump (7), the threshold temperature (3) being a function of said threshold performance coefficient, said threshold temperature forming said operating point threshold value.

4. Regulation method according to any one of claims 2 to 3, **characterised in that**, the combustion boiler (8) comprising a pace regulator able to pilot the combustion boiler at at least a first pace of operation and a second pace of operation with a power higher than the first pace of operation, the intermittent operation of the combustion boiler (8) comprises:

    - changing intermittently operating paces of the combustion boiler (8).

5. Regulation method according to claim 4, **characterised in that**, when the difference between the threshold temperature (3) and the target temperature (1) is negative and the difference between said threshold (3) and target temperatures (1) is lower than a first threshold (41), and when said difference is positive and lower than a third threshold (43), the intermittent operation of the combustion boiler (8) comprises:

- controlling (S3) the combustion boiler (8) according to a forced cycling (20) mode of operation, said forced cycling (20) comprising the extension of at least one parameter among the stop phases (201, 211) of the combustion boiler (8) and operating phases at a first pace of the combustion boiler (8).

6. Regulation method according to any one of claims 4 or 5, **characterised in that**, when the difference between the threshold temperature (3) and the target temperature (1) is positive and higher than a third threshold (43) and when said difference is positive and lower than a second threshold (42), the intermittent operation of the combustion boiler (8) comprises:

- controlling (S3) the combustion boiler (8) according to an accelerated cycling (30) mode of operation, said accelerated cycling (30) comprising the shortening of at least one parameter among the start-up and stop phases of the combustion boiler (8) and operating phases at a first pace and at a second pace with a power higher than the first pace of the combustion boiler (8).

7. Regulation method according to any one of claims 4 to 6, **characterised in that** the control of the combustion boiler (8) according to an intermittent operating rate comprises:

- calculating at least one parameter from a start-up duration (202, 212) and an operation duration at a second pace of the combustion boiler (8) and at least one parameter among a stop duration (201, 211) and an operation duration at a first pace with a power lower than the power of the second pace of the combustion boiler (8), said durations being computed dynamically in line with the value of the difference between the threshold temperature (3) and target temperature (1).

8. Regulation method according to any one of claims 4 to 7, **characterised in that** the control of the combustion boiler (8) according to an intermittent operating rate comprises:

- defining a temperature band centred on the target temperature (1), the width of which is a function of the difference (905) between the threshold temperature (3) and target temperature (1);
- performing at least one step among turning on the combustion boiler (8) and actuating the combustion boiler (8) in a second pace, when the instantaneous temperature (2) upstream of the heat pump (7) is lower than the temperature (901) of said band; and
- making at least one step among stopping the combustion boiler (8) and controlling the combustion boiler (8) at a first pace with a power lower than the power of the second pace when said instantaneous temperature (2) is higher than the temperature (900) of said band.

9. Regulation method according to one of the preceding claims, **characterised in that** it comprises:

- choosing a type of operation of the system respecting at least one of the constraints among a reduction of energy consumption, a reduction in consumption costs, a reduction in emission of gas with greenhouse effect, said type of operation defining a threshold performance coefficient Cthr of the heat pump connected to the yield of the combustion generator, the threshold performance coefficient corresponds to the yield of the heat pump below which the heat pump becomes less profitable than the combustion boiler.

10. Regulation method according to claim 9, **characterised in that** it comprises a calculation of a first speed (5) v_p of a variable speed compressor of the heat pump (7), said first speed (5) being computed from the threshold performance coefficient Cthr of the heat pump (7) with the aid of the following formula:

$$\left.\frac{dP(th\_PAC)}{dP(elec\_PAC)}\right|v\_p = C(thr)$$

where $P_{th\_PAC}$ is the thermal power supplied by the heat pump (7), $P_{elec\_PAC}$ is the electric power consumed by the heat pump (7).

11. Regulation method according to claim 10, **characterised in that** the compressor is operated to reach the first speed (5).

12. Regulation method according to any one of claims 10 or 11, **characterised in that** it further comprises:

- calculating a second speed (6) for the compressor of the heat pump (7); said second speed (6) being a speed that allows the heat pump (7) to reach said target operating point (1) of the system while keeping the combustion boiler (8) stopped, and
- managing the compressor to reach the second speed (6) under the following conditions:

-- the combustion boiler (8) being stopped to avoid intermittent operation of the heat pump (7), the heat pump (7) is capable of reaching said target operating point (1) of the system, and
-- a current performance coefficient of the heat pump (7) is higher than the threshold performance coefficient.

13. Regulator of a hybrid heating system (702), said system comprising at least:

- a heat pump (7) and
- a combustion boiler (8),

said regulator (702) comprising a circuit permitting:

- obtaining a value of a target operating point (1) of the system,
- determining a value of a threshold operating point (3) of the heat pump (7), the crossing of said threshold operating point (3) bringing about a permutation of the operating rate of the heat pump (7) between an active state and an inactive state, **characterised in that** said circuit allows control of the combustion boiler (8) according to an intermittent operating rate when the difference between the value of said threshold operating point (3) and the value of said target operating point (1) is lower than a chosen value (4).

14. A hybrid heating system comprising a controller (702) according to Claim 13 comprising:

- a heat pump (7); and
- a combustion boiler (8); and
- a fluidic circuit (9) connecting the heat pump (7) to the combustion boiler (8); and
- a sensor (71).

**FIG. 1**

S1

$($ PAC TARG_PT $)$

↓

OBT. PAC THR_PT

↓

S2 — 4

N ← ‖THR_PT - TARG_PT‖ < Δ ?

↓ Y

CYCL. COMB_H — S3

↓

S4

N ← TARG_PT > THR_PT ?

↓ Y

S6 — PAC ⇒ ON.

COMB_H ⇒ ON.
PAC ⇒ OFF. — S5

**FIG. 2**

FIG. 3a

FIG. 3b

FIG. 4a

FIG. 4b

**FIG. 5**

**FIG. 6a**

**FIG. 6b**

**FIG. 7a**

**FIG. 7b**

FIG. 8

**FIG. 9**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102010056300
- WO 2012077333 A2